(19) Europäisches Patentamt / European Patent Office / Office européen des brevets

(11) **EP 4 528 314 A1**

(12) **EUROPEAN PATENT APPLICATION**

(43) Date of publication:
26.03.2025 Bulletin 2025/13

(21) Application number: 24177339.9

(22) Date of filing: 22.05.2024

(51) International Patent Classification (IPC):
*G01S 7/03* (2006.01)  *G01S 13/88* (2006.01)
*H01Q 1/38* (2006.01)  *H01Q 21/08* (2006.01)
*H01Q 25/00* (2006.01)  *G01S 13/02* (2006.01)

(52) Cooperative Patent Classification (CPC):
**G01S 7/032; G01S 13/886; G01S 13/887;**
**H01Q 1/38; H01Q 21/08; H01Q 25/00;**
**H01Q 25/005;** G01S 2013/0245

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 20.09.2023 JP 2023151902

(71) Applicant: **Kabushiki Kaisha Toshiba**
**Tokyo 105-0023 (JP)**

(72) Inventor: **MORI, Hiroki**
**Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **TRANSMIT/RECEIVE ANTENNA MODULE, SYSTEM, METHOD, AND STORAGE MEDIUM**

(57) According to one arrangement, a transmit/receive antenna module includes a radar circuit (30, 90) arranged at a substrate, a transmit antenna (16) arranged at a first end portion of the substrate and connected to the radar circuit (30, 90), a receive antenna (26) arranged at a second end portion of the substrate and connected to the radar circuit (30, 90). The transmit antenna (16) is capable of transmitting an electromagnetic wave parallel to the substrate. The receive antenna (26) is capable of receiving an electromagnetic wave parallel to the substrate.

FIG. 19

EP 4 528 314 A1

## Description

FIELD

The present disclosure relates to a transmit/receive antenna module, a system, a method, and a storage medium.

BACKGROUND

An Integrated circuit having a radar function has been commercialized, and a radar device has become available at low cost. The radar device is expected to be applied to various fields such as automobiles, nondestructive inspection, medical, and security.

In the commercialized integrated circuit having the radar function, the number of antennas that can be mounted on is small. Therefore, increase of an aperture length of an antenna array is limited, and thus it is difficult to increase a spatial resolution.

In order to increase the number of applications of the radar device, it is desired that the aperture length of the antenna array can be adjusted and increased easily. As an example, it is proposed to provide a plurality of antenna modules. A plurality of integrated circuits and the antenna arrays are mounted on the antenna module.

When the number of the antennas increases in association with the increase of the aperture length of the antenna array, the required installation space becomes larger and the installation of a plurality of antenna modules becomes difficult.

BRIEF DESCRIPTION OF THE DRAWINGS

FIG. 1 is a block diagram showing an example of a radar device according to a first arrangement.
FIG. 2 is a block diagram illustrating an example of an IC according to the first arrangement.
FIG. 3 is a block diagram illustrating another example of a radar device according to the first arrangement.
FIG. 4 illustrates the principle of a walk-through type inspection device, which is one application example of the radar device according to the first arrangement.
FIG. 5 illustrates the transmission directions of the electromagnetic waves of transmitter modules and the reception directions of the electromagnetic waves of receiver modules according to the first arrangement.
FIG. 6 is a perspective view illustrating an example of the walk-through type inspection device according to the first arrangement.
FIG. 7 is a schematic perspective view illustrating an example of a transmit antenna or a receive antenna including an SIW aperture antenna according to the first arrangement.
FIG. 8 is a schematic plan view illustrating an example of the transmit antenna or the receive antenna according to the first arrangement.
FIG. 9 is a schematic cross-sectional view illustrating the example of the transmit antenna or the receive antenna according to the first arrangement.
FIG. 10 is a schematic cross-sectional view illustrating the example of the transmit antenna or the receive antenna according to the first arrangement.
FIG. 11 is a schematic perspective diagram illustrating the example of the transmit antenna or the receive antenna according to the first arrangement.
FIG. 12 is a schematic plan view illustrating the example of the transmit antenna or the receive antenna according to the first arrangement.
FIG. 13 is a block diagram illustrating an example of the electrical configuration of the radar device shown in FIG. 6.
FIG. 14 is a perspective view illustrating another example of the walk-through type inspection device according to the first arrangement.
FIG. 15 is a block diagram illustrating an example of the electrical configuration of the inspection device according to the first arrangement.
FIG. 16 is a diagram illustrating an example of a transmission/reception sequence of the inspection device according to the first arrangement.
FIG. 17 illustrates another example of the transmission/reception sequence of the inspection device according to the first arrangement.
FIG. 18 illustrates an example of possible interference of the radar devices according to the first arrangement.
FIG. 19 is a perspective view illustrating an example of a walk-through type inspection device according to the second arrangement.

FIG. 20 is a block diagram illustrating an example of the electrical configuration of the inspection device according to the second arrangement.

FIG. 21 is a block diagram illustrating an example of a transmitter/receiver module according to the second arrangement.

FIG. 22 is a diagram illustrating an example of connection between an IC and transmit antennas according to the second arrangement.

FIG. 23 is a diagram illustrating an example of connection between the IC and receive antennas according to the second arrangement.

FIG. 24 illustrates an example of a transmit direction and a receive direction of a transmitter/receiver module according to the second arrangement.

FIG. 25 illustrates a transmission/reception sequence of a radar signal of the inspection device according to the second arrangement.

FIG. 26 shows an example of the transmission/reception sequence of the inspection device according to the second arrangement.

FIG. 27 is shows another example of the transmission/reception sequence of the inspection device according to the second arrangement.

FIG. 28 illustrates a modified example of the inspection device according to the second arrangement.

DETAILED DESCRIPTION

Arrangements will be described below with reference to the drawings. In the following descriptions, a device and a method are illustrated to embody the technical concept of the arrangements. The technical concept is not limited to the configuration, shape, arrangement, material or the like of the structural elements described below. Modifications that could easily be conceived by a person with ordinary skill in the art are naturally included in the scope of the disclosure. To make the descriptions clearer, the drawings may schematically show the size, thickness, planer dimension, shape, and the like of each element differently from those in the actual aspect. The drawings may include elements that differ in dimension and ratio. Elements corresponding to each other are denoted by the same reference numeral and their overlapping descriptions may be omitted. Some elements may be denoted by different names, and these names are merely an example. It should not be denied that one element is denoted by different names. Note that "connection" means that one element is connected to another element via still another element as well as that one element is directly connected to another element. If the number of elements is not specified as plural, the elements may be singular or plural.

According to one arrangement, a transmit/receive antenna module includes a radar circuit arranged at a substrate, a transmit antenna arranged at a first end portion of the substrate and connected to the radar circuit, a receive antenna arranged at a second end portion of the substrate and connected to the radar circuit. The transmit antenna is capable of transmitting an electromagnetic wave parallel to the substrate. The receive antenna is capable of receiving an electromagnetic wave parallel to the substrate.

[First Arrangement]

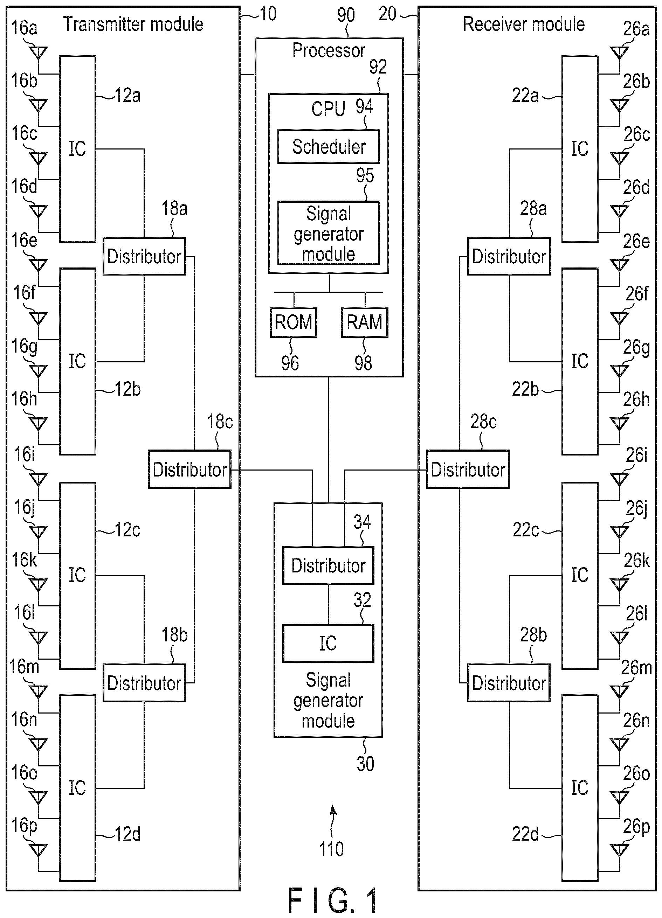

FIG. 1 is a block diagram illustrating an example of a radar device 110 according to a first arrangement. The radar device 110 includes at least one module. At least one integrated circuit having a radar function is mounted on the module. An example of the module is a transmit antenna module having a transmission function (hereinafter referred to as a transmitter module) 10, a receive antenna module having a reception function (hereinafter referred to as a receiver module) 20, and a signal generator module 30 generating a reference signal and a clock signal. FIG. 1 shows an example including one transmitter module 10 and one receiver module 20. The first arrangement includes an example including transmitter modules 10 and receiver modules 20. By connecting the transmitter modules 10 and the receiver modules 20 so as to be connected to the signal generator module 30, the synchronous control of a plurality of integrated circuits and the adjustment or the increase of the aperture length of an antenna array can be easily achieved.

The radar device 110 further includes a processor 90. The processor 90 is connected to the transmitter module 10, the receiver module 20, and the signal generator module 30. The processor 90 includes a CPU 92, a ROM 96, and a RAM 98. The ROM 96 is a non-transitory computer-readable storage medium. The ROM 96 stores a computer program which is executable by the CPU 92 for controlling the radar device 110. The RAM 98 temporarily stores various data that are in operation. The CPU 92 executes program to have a function of a scheduler 94. The scheduler 94 generates a trigger signal to control the transmission timing.

The signal generator module 30 generates a signal to control the transmission and reception of the radar signal according to a radar scheme. An example of the radar scheme is a linear frequency modulated continuous wave (L-FMCW) scheme in which the frequency increases linearly as time passes. The signal generator module 30 includes a distributor 34 and an integrated circuit (hereinafter referred to as an IC) 32 having the radar function of the L-FMCW scheme. Other examples of the radar scheme include a non-modulation CW scheme and a pulse scheme. Arrangements are not limited to these radar schemes and are applied to other radar schemes.

The IC 32 generates the clock signal and an L-FMCW signal (hereinafter referred to as a chirp signal) as the reference signal. The frequency of the chirp signal is in a frequency range. When it is unnecessary to distinguish the chirp signal and the clock signal from each other, these signals are simply referred to as "signal".

The transmitter module 10 and the receiver module 20 operate according to the clock signal output by the signal generator module 30. Therefore, the transmitter module 10 and the receiver module 20 operate in synchronization with each other.

An output signal of the IC 32 is input to the distributor 34. The distributor 34 distributes the input signal to two output terminals. A first output signal of the distributor 34 is supplied to the transmitter module 10. A second output signal of the distributor 34 is supplied to the receiver module 20. Since the clock signal from the single signal generator module 30 is supplied to the transmitter module 10 and the receiver module 20, a transmission and a reception are synchronized.

The transmitter module 10 includes transmit antennas 16, at least two ICs 12, and at least one distributor 18. The IC 12 has a radar transmission function according to the L-FMCW scheme. The transmitter module 10 may comprise a substrate (not shown). The ICs 12, the transmit antennas 16, and the distributor 18 may be formed on the substrate. The number of the ICs12 is, for example, four. The number of the transmit antennas 16 is, for example, sixteen. The number of the distributors 18 is, for example, three. The distributor 18 distributes the input signal to the two output terminals.

The signal from the distributor 34 is input to a distributor 18c. The distributor 18c distributes the input signal to two output terminals. The first output signal of the distributor 18c is input to a distributor 18a. The second output signal of the distributor 18c is input to a distributor 18b.

The distributor 18a distributes the input signal to two output terminals. The first output signal of the distributor 18a is input to an IC 12a. The second output signal of the distributor 18a is input to an IC 12b. The IC 12a is connected to four transmit antennas 16a, 16b, 16c, and 16d. The IC 12b is connected to four transmit antennas 16e, 16f, 16g, and 16h.

The distributor 18b distributes the input signal to two output terminals. The first output signal of the distributor 18b is input to an IC 12c. The second output signal of the distributor 18b is input to the IC 12d. The IC 12c is connected to four transmit antennas 16i, 16j, 16k, and 16l. The IC 12d is connected to four transmit antennas 16m, 16n, 16o, and 16p.

The clock signal from the signal generator module 30 is supplied to the ICs 12a to 12d. The transmissions of the ICs 12a to 12d are synchronized based on the clock signal. The IC 12a causes the transmit antennas 16a to 16d to transmit electromagnetic waves corresponding to the chirp signal (hereinafter referred to as a radar signal) to an object. The IC 12b causes the transmit antennas 16e to 16h to transmit the electromagnetic waves corresponding to the radar signal to the object. The IC 12c causes the transmit antennas 16i to 16l to transmit the electromagnetic waves corresponding to the radar signal to the object. The IC 12d causes the transmit antennas 16m to 16p to transmit the electromagnetic waves corresponding to the radar signal to the object.

The number of the transmit antennas 16 connected to each of the ICs 12a to 12d is not limited to four, but may be two, six or more, or an odd number. The number of the transmit antennas 16 connected to each of the ICs 12a to 12d is not limited to the same but may be different for each of the ICs 12. The intervals between all of adjacent antennas (for example, 16a and 16b) of the transmit antennas 16a to 16p may be set to uniform intervals or may be set to a plurality of intervals relatively prime to each other. An example of the uniform interval is one wavelength or a half wavelength of one of electromagnetic wave frequencies in the frequency range of a transmission signal, e.g., the chirp signal.

The receiver module 20 includes receive antennas 26, at least two ICs 22, and at least one distributor 28. The IC 22 has a radar reception function of the L-FMCW scheme. The receiver module 20 includes a substrate (not shown). The ICs 22, receive antennas 26, and distributor 28 may be formed on the substrate. The number of the ICs 22 is, for example, four. The number of the receive antennas 26 is, for example, sixteen. The number of the distributors 28 is, for example, three. The distributor 28 distributes the input signal to two output terminals.

The signal from the distributor 34 is input to a distributor 28c. The distributor 28c distributes the input signal to two output terminals. The first output signal of the distributor 28c is input to a distributor 28a. The second output signal of the distributor 28c is input to a distributor 28b.

The distributor 28a distributes the input signal to two output terminals. The first output signal of the distributor 28a is input to an IC 22a. The second output signal of the distributor 28a is input to an IC 22b. The IC 22a is connected to four transmit antennas 26a, 26b, 26c, and 26d. The IC 22b is connected to four receive antennas 26e, 26f, 26g, and 26h.

The distributor 28b distributes the input signal to two output terminals. The first output signal of the distributor 28b is input to the IC 22c. The second output signal of the distributor 28b is input to the IC 22d. The IC 22c is connected to four receive antennas 26i, 26j, 26k, and 26l. The IC 22d is connected to four receive antennas 26m, 26n, 26o, and 26p.

The clock signal from the signal generator module 30 is supplied to the ICs 22a to 22d. The ICs 22a to 22d perform the synchronized reception based on the clock signal. The IC 22a processes the signals received by the receive antennas 26a to 26d according to the chirp signal. The IC 22b processes the signals received by the receive antennas 26e to 26h according to the chirp signal. The IC 22c processes the signals received by the receive antennas 26i to 26l according to the chirp signal. The IC 22d processes the signals received by the receive antennas 26m to 26p according to the chirp signal.

The number of the receive antennas 26 connected to each of the ICs 22a to 22d is not limited to four, but may be two, six or more, or an odd number. The number of the receive antennas 26 connected to each of the ICs 22a to 22d is not limited to the same number, but may be different for each of the IC. The intervals between all of adjacent antennas 26 (for example, 26a and 26b) of the receive antennas 26a to 26p may be set to uniform intervals or may be set to a plurality of intervals relatively prime to each other. An example of the uniform interval is the one wavelength or the half wavelength.

The transmitter module 10, the receiver module 20, and the signal generator module 30 are connected to the processor 90. The processor 90 is an upper layer device of the radar device 110. The processor 90 may perform beam-forming process of a transmission beam and a reception beam. The processor 90 performs an initial setting and a timing control of the transmitter module 10. The processor 90 can perform an array signal processing of the received signal to detect the presence or absence of belongings, the direction of the belongings, the distance to the belongings, and the type of belongings and may display an image of the belongings. In that case, the CPU 92 has a function of an image generator module in addition to the function of the scheduler 94.

The spatial resolution required for the direction estimation and the image display of the radar device 110 using the antenna array including a plurality of antennas is determined depending on the number of the antennas. Only a limited number of the antennas can be connected to the single IC 12 or 22 that has the radar function. Thus, the spatial resolution cannot be increased. In the arrangement, a plurality of ICs, for example, four ICs 12a to 12d, are cascaded to realize a transmit antenna array including sixteen antennas 16a to 16p. A plurality of ICs, for example, four ICs 22a to 22d, are cascaded to realize a transmit antenna array including sixteen antennas 26a to 26p. Thus, the spatial resolution of the radar device 110 can be quadruple of a spatial resolution of a case in which one IC 12 is used in the transmitter module 10 and one IC 22 is used in the receiver module 20.

A dedicated IC may be used as each of the ICs 12a to 12d, the ICs 22a to 22d, and the IC 32. However, the same IC may be used in common.

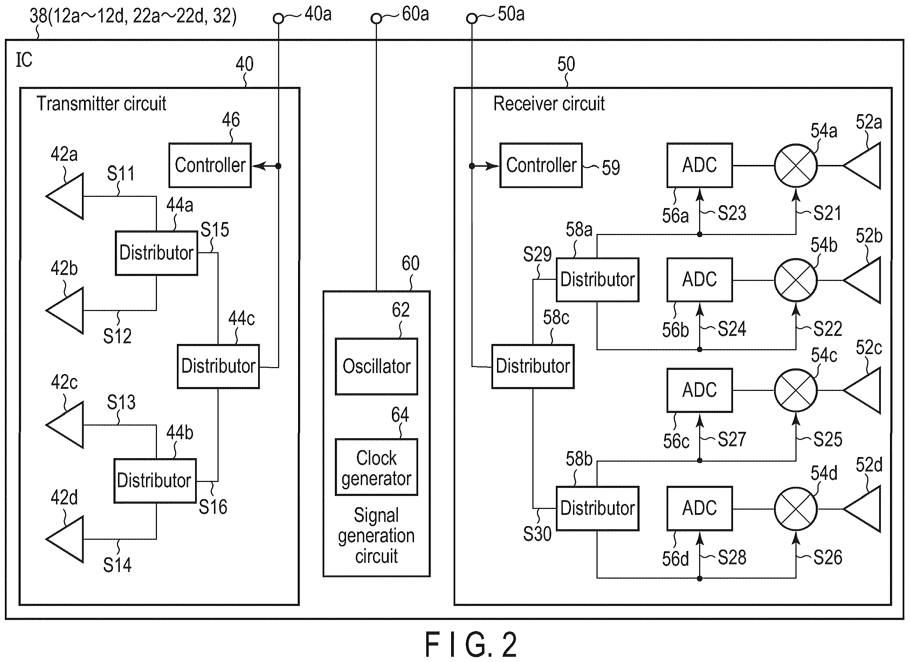

FIG. 2 is a block diagram illustrating an example of an IC 38 used in common as each of the ICs 12a to 12d, the ICs 22a to 22d, and the IC 32 according to the first arrangement. The IC 38 includes a transmitter circuit 40, a receiver circuit 50, and a signal generation circuit 60.

The signal generation circuit 60 includes an oscillator 62 and a clock generator 64. The oscillator 62 generates the chirp signal. The output signal of the signal generation circuit 60 is output to the outside of the IC 38 via an output terminal 60a.

The transmitter circuit 40 includes transmission amplifiers 42a, 42b, 42c, and 42d, and distributors 44a, 44b, and 44c, and a controller 46. The chirp signal and the clock signal from the outside of the IC 38 are input to an input terminal 40a. The trigger signal from the processor 90 is input to the controller 46. The processor 90 supplies the trigger signal to the controller 46 of one the transmitter circuits 40, which initiates transmission.

The clock signal is input to the controller 46. The controller 46 controls the operation timing of each of the transmission amplifiers 42 based on the clock signal and the trigger signal. The chirp signal is input to the distributor 44c. The distributor 44c supplies the chirp signal to the distributor 44a and the distributor 44b. The distributor 44a supplies the chirp signal from the distributor 44c to the transmission amplifier 42a and the transmission amplifier 42b. The distributor 44b supplies the chirp signal from the distributor 44c to the transmission amplifier 42c and the transmission amplifier 42d.

Each of the transmission amplifiers 42a to 42d is connected to each of the four transmit antennas 16. As a result, the radar signal according to the chirp signal is irradiated from each of the four transmit antennas 16.

An example of the electromagnetic wave used as the radar signal in the arrangement is an electromagnetic wave having a wavelength of 1 to 30 millimeters. An electromagnetic wave having a wavelength of 1 to 10 millimeters is referred to as a millimeter wave. An electromagnetic wave having a wavelength of 10 to 100 millimeters is referred to as a microwave. Another example of the electromagnetic wave is an electromagnetic wave having a wavelength of 100 micrometers to 1 millimeter, which is referred to as a terahertz wave.

The distributor 44a is arranged at a position substantially equidistant from the transmission amplifier 42a and the transmission amplifier 42b. Therefore, the length of a signal line S11 between the distributor 44a and the transmission amplifier 42a can easily be made equal to the length of a signal line S12 between the distributor 44a and the transmission amplifier 42b. The distributor 44b is arranged at a position substantially equidistant from the transmission amplifier 42c and the transmission amplifier 42d. Therefore, the length of a signal line S13 between the distributor 44b and the transmission amplifier 42c can easily be made equal to the length of a signal line S14 between the distributor 44b and the transmission amplifier 42d. The distributor 44c is arranged at a position substantially equidistant from the distributor 44a and the distributor 44b. Therefore, the length of a signal line S15 between the distributor 44c and the distributor 44a can easily be made equal to the length of a signal line S16 between the distributor 44c and the distributor 44b.

By dividing the signal from the input terminal 40a into two signals by the distributor 44c and further dividing each of the two divided signals into two signals in this manner, the lengths of the signal lines between the input terminal 40a and the four transmission amplifiers 42a to 42d can easily be made equal. As a result, variation in the transmission delay of four chirp signals input to the four transmission amplifiers 42a to 42d can be suppressed and the directivity of the transmit antenna array can be accurately controlled. If the signal from the input terminal 40a is divided into four signals by one distributor, four signal lines need to be routed to make the lengths of the four signal lines equal, and thus the degree of integration of the IC 38 cannot be increased.

The receiver circuit 50 includes reception amplifiers 52a, 52b, 52c, and 52d, mixers 54a, 54b, 54c, and 54d, A/D converters (ADC) 56a, 56b, 56c, and 56d, distributors 58a, 58b, and 58c, and a controller 59. The chirp signal and the clock signal from the outside of the IC 38 are input to an input terminal 50a.

The clock signal is input to the controller 59. The controller 59 controls the operation timing of the receiver circuit 50 based on the clock signal. Thus, the operations of the transmitter circuit 40 and the receiver circuit 50 are synchronized. The controller 59 causes the reception amplifiers 52 connected to all of the receive antennas 26a to 26p to operate simultaneously.

The chirp signal is input to the distributor 58c. Each of the four receive antennas 26 is connected to each of the reception amplifiers 52a to 52d.

The outputs of the reception amplifiers 52a to 52d are supplied to the ADCs 56a to 56d via the mixers 54a to 54d, respectively.

The distributor 58c supplies the chirp signal and the clock signal from the input terminal 50a to the distributor 58a and the distributor 58b. The distributor 58a supplies the chirp signal from the distributor 58c to the mixers 54a and 54b and supplies the clock signal from the distributor 58c to the ADCs 56a and 56b. The distributor 58b supplies the chirp signal from the distributor 58c to the mixers 54c and 54d and also supplies the clock signal from the distributor 58c to the ADCs 56c and 56d.

The mixers 54a to 54d use the chirp signals to convert RF signals from the reception amplifiers 52a to 52d into IF-band received signals. The ADCs 56a to 56d synchronize the IF-band received signals with the clock signals and covert these synchronized signals to digital signals.

The digital signals from the ADCs 56a to 56d are supplied to the processor 90 via output terminals (not shown).

The distributor 58a is arranged at a position substantially equidistant from the mixer 54a and the mixer 54b and a position substantially equidistant from the ADC 56a and the ADC 56b. Therefore, the length of a signal line S21 between the distributor 58a and the mixer 54a can easily be made equal to the length of a signal line S22 between the distributor 58a and the mixer 54b. The length of a signal line S23 between the distributor 58a and the ADC 56a can easily be made equal to the length of a signal line S24 between the distributor 58a and the ADC 56b.

The distributor 58b is arranged at a position substantially equidistant from the mixer 54c and the mixer 54d and a position substantially equidistant from the ADC 56c and the ADC 56d. Therefore, the length of a signal line S25 between the distributor 58b and the mixer 54c can easily be made equal to the length of a signal line S26 between the distributor 58b and the mixer 54d. The length of a signal line S27 between the distributor 58b and the ADC 56c can easily be made equal to the length of a signal line S28 between the distributor 58b and the ADC 56d.

The distributor 58c is arranged at a position substantially equidistant from the distributor 58a and the distributor 58b. Therefore, the length of a signal line S29 between the distributor 58c and the distributor 58a can easily be made equal to the length of a signal line S30 between the distributor 58c and the distributor 58b.

Thus, by dividing the signal from the input terminal 50a into two signals by the distributor 58c and further dividing each of the two divided signals into two signals, the lengths of the signal lines between the input terminal 50a and the four mixers 54a to 54d can easily be made equal and the length of the signal lines between the input terminal 50a and the four ADCs 56a to 56d can easily be made equal. As a result, variation in the transmission delay of four chirp signals respectively input to the four mixers 54a to 54d can be suppressed and the RF signals can be converted into IF signals without the occurrence of the phase shift. Furthermore, variation in the timing deviations of four clock signals respectively input to the four ADCs 56a to 56d can be suppressed, and the IF signals can be converted to the digital signals at correct timing. If the signal from the input terminal 50a is divided into four signal lines, the four signal lines need to be routed in order to make the lengths of the four signal lines equal. Thus, the degree of integration of the IC 38 cannot be increased.

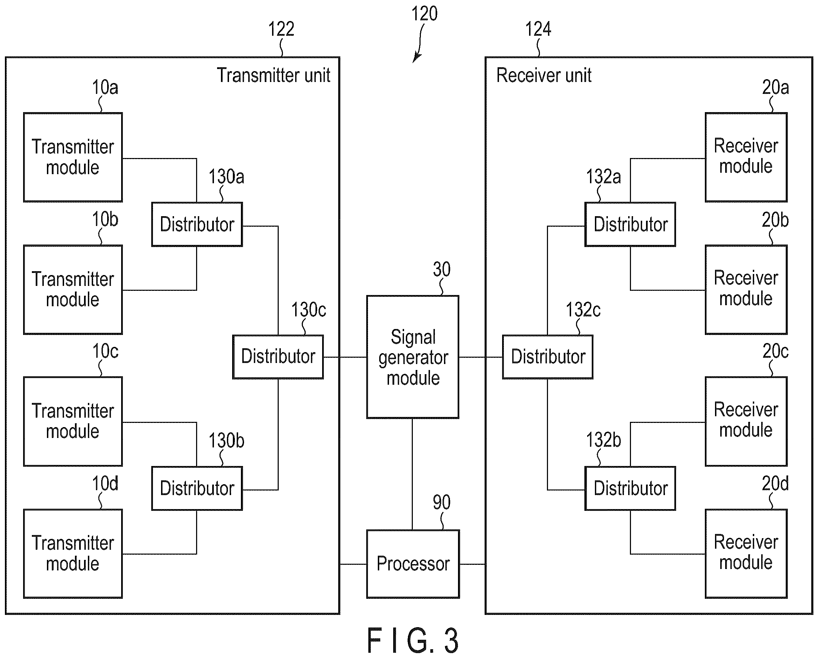

FIG. 3 is a block diagram illustrating another example of a radar device 120 according to the first arrangement. FIG. 3 includes a modified example of the antenna module. FIG. 1 shows an example in which the number of the antennas of the transmit/receive antenna array is sixteen. FIG. 3 shows an example in which the number of the antennas of the transmit/receive antenna array is sixty-four. The radar device 120 includes a transmitter unit 122, a receiver unit 124, the signal generator module 30, and the processor 90.

The signal generator module 30 is connected to the transmitter unit 122 and the receiver unit 124. Since the clock signal from the single signal generator module 30 is supplied to the transmitter unit 122 and the receiver unit 124, the transmission and the reception can be synchronized.

The transmitter unit 122 includes transmitter modules 10a, 10b, 10c, and 10d and distributors 130a, 130b, and 130c. Each of the transmitter modules 10a, 10b, 10c, and 10d is equivalent to the transmitter module 10 shown in FIG. 1. Each of the transmitter modules 10a, 10b, 10c, and 10d includes sixteen transmit antennas 16. The transmitter module 122 includes sixty-four transmit antennas 16. The number of the transmitter modules 10 included in the transmitter unit 122 is not limited to four, but may be any number as long as the number is two or more.

The distributor 130c supplies the signals (chirp signal and clock signal) from the signal generator module 30 to each of the distributor 130a and the distributor 130b. The distributor 130a supplies the signals from the distributor 130c to each of the transmitter module 10a and the transmitter module 10b. The distributor 130b supplies the signals from the distributor 130c to each of the transmitter module 10c and the transmitter module 10d.

The distributor 130c is arranged at a position substantially equidistant from the distributor 130a and the distributor 130b. The distributor 130a is arranged at a position substantially equidistant from the transmitter module 10a and the transmitter module 10b. The distributor 130b is arranged at a position substantially equidistant from the transmitter module 10c and the transmitter module 10d. Therefore, the chirp signal from the signal generator module 30 is supplied to each of the transmitter modules 10a to 10d via the signal lines having the substantially equal lengths. The operations of the receiver modules 10a to 10d are synchronized based on the clock signal from the signal generator module 30.

The receiver unit 124 includes receiver modules 20a, 20b, 20c, and 20d and distributors 132a, 132b, and 132c. Each of the receiver modules 20a, 20b, 20c, and 20d is equivalent to the receiver module 20 shown in FIG. 1. Each of the receiver modules 20a, 20b, 20c, and 20d includes sixteen receive antennas. The receiver unit 124 includes sixty-four receive antennas 26. The number of the receiver modules 20 included in the receiver unit 124 is not limited to four, but may be any number as long as the number is two or more.

The distributor 132c supplies the signals (chirp signal and clock signal) from the signal generator module 30 to each of the distributor 132a and the distributor 132b. The distributor 132a supplies the signals from the distributor 132c to each of the receiver module 20a and the receiver module 20b. The distributor 132b supplies the signals from the distributor 132c to each of the receiver module 20c and the receiver module 20d. The distributor 132c is arranged at a position substantially equidistant from the distributor 132a and the distributor 132b. The distributor 132a is arranged at a position substantially equidistant from the receiver module 20a and the receiver module 20b. The distributor 132b is arranged at a position substantially equidistant from the receiver module 20c and the receiver module 20d. Therefore, the chirp signal and the clock signal from the signal generator module 30 are supplied to each of the receiver modules 20a to 20d via the signal lines having the substantially equal lengths. The operations of the receiver modules 20a to 20d are synchronized based on the clock signal from the signal generator module 30.

The transmitter modules 10a, 10b, 10c, and 10d, the receiver modules 20a, 20b, 20c, and 20d, and the signal generator module 30 are connected to the processor 90.

The radar device 120 uses sixteen ICs 12 to operate the sixty-four transmit antennas 16 and uses sixteen ICs 22 to operate the sixty-four receive antennas 26. Therefore, the spatial resolution of the radar device 120 can be quadruple of the spatial resolution of the radar device 110 in which the four ICs 12 are used to operate the sixteen transmit antenna 16 and the four ICs 22 are used to operate the sixteen receive antennas 26.

One application example of the radar devices 110 and 120 according to the first arrangement is a security system for inspecting belongings of an object. For example, locations where this system is arranged are near entrance gates of areas where security is required to be maintained, such as train stations, amusement parks, concert halls, and buildings. This system inspects the object when the object passes through the entrance gate and prevents an object possessing a predetermined item from entering the area. It is not desirable to stop the object for the inspection. Therefore, a walk-through type inspection device that emits electromagnetic waves to the object passing through the gate is proposed.

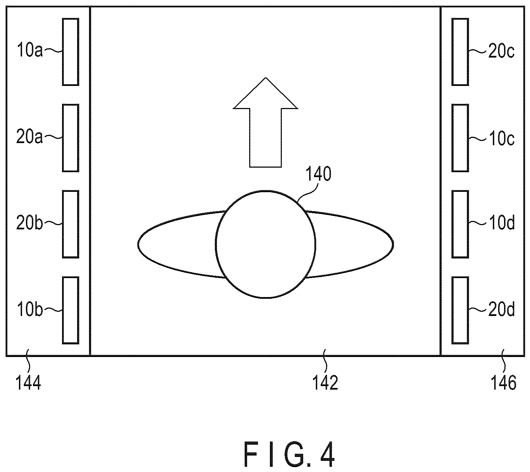

FIG. 4 illustrates the principle of the walk-through type inspection device, which is one application example of the radar device according to the first arrangement. FIG. 4 shows an example of the walk-through type inspection device to which the radar device 120 shown in FIG. 3 is applied. The radar device 110 shown in FIG. 1 can also be applied to the walk-through type inspection device.

The inspection device inspects the belongings of an object 140 walking through a path 142. The path 142 is also referred to as an inspection lane. A left enclosure 144 is arranged at the left portion of the path 142. A right enclosure 146 is arranged at the right portion of the path 142. In this specification, right and left refer to right and left viewed from the object 140 walking through the path 142. The left enclosure 144 and the right enclosure 146 are formed of a material that does not absorb and reflect electromagnetic waves, for example, resin.

The transmitter unit 122 shown in FIG. 3 is divided into two portions. A first portion includes the transmitter modules 10a and 10b. A second portion includes the transmitter modules 10c and 10d. The transmitter modules 10 may not be divided equally in number. For example, the transmitter unit 122 may be divided into three transmitter modules and one transmitter module. The transmitter modules 10a and 10b of the first portion are arranged in the left enclosure 144. The transmitter modules 10c and 10d of the second portion are arranged in the right enclosure 146.

The receiver unit 124 shown in FIG. 3 is divided into two portions. A first portion includes the receiver modules 20a and 20b. A second portion includes the receiver modules 20c and 20d. The receiver modules 20 may not be divided equally in number. For example, the receiver unit 124 may be divided into three receiver modules and one receiver module. The receiver modules 20a and 20b of the first portion are arranged in the left enclosure 144. The receiver modules 20c and 20d of the second portion are arranged in the right enclosure 146.

FIG. 4 does not specifically show the installation location and direction of the transmitter modules 10 and the receiver modules 20 in the left enclosure 144 and the right enclosure 146. The installation location and direction of the transmitter modules 10 and the receiver modules 20 in the left enclosure 144 and the right enclosure 146 may be arbitrary and can be determined according to specifications of the spatial resolution, the performance, and the like desired to be achieved.

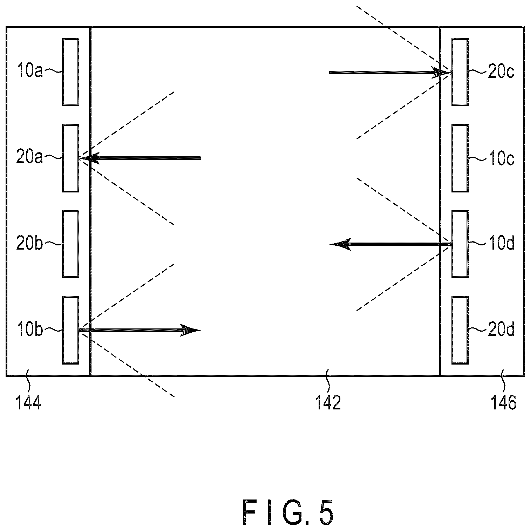

FIG. 5 illustrates the transmission directions of the electromagnetic waves of the transmitter modules 10 (transmit antennas 16) and the reception directions of the electromagnetic waves of the receiver modules 20 (receive antennas 26) according to the first arrangement. The direction of the electromagnetic wave is represented by the direction of a main lobe in the radiation pattern of the antenna.

The transmission directions of the electromagnetic waves of the transmitter modules 10 (transmit antennas 16) in the left enclosure 144 are to the right direction, such that the path 142 is the object inspection area. The reception directions of the electromagnetic waves of the receiver modules 20 (receive antennas 26) in the left enclosure 144 are to the right direction, such that the path 142 is the object inspection area.

The transmission directions of the electromagnetic waves of the transmitter modules 10 (transmit antennas 16) in the right enclosure 146 are to the left direction, such that the path 142 is the object inspection area. The reception directions of the electromagnetic waves of the receiver modules 20 (receive antennas 26) in the right enclosure 146 are to the left direction, such that the path 142 is the object inspection area.

Each of the right direction and the left direction is not limited to one angle, but is set to a range of angles. For example, when the entire circumference is 360 degrees and 0 degrees is the travel direction of the object 140, the right is + 90 degrees and the left is + 270 (- 90) degrees. The right direction is an angle range of + 90 degrees ± less than 90 degrees. The left direction is an angle range of + 270 degrees ± less than 90 degrees.

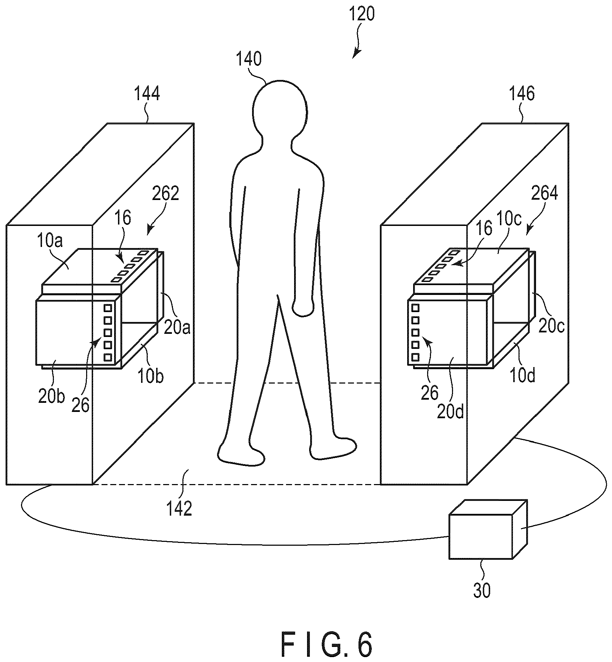

FIG. 6 is a perspective view illustrating an example of the walk-through type inspection device which is the application example of the radar device 120 according to the first arrangement.

In the left enclosure 144, the substrate of the transmitter module 10a and the substrate of the transmitter module 10b are arranged so as to be parallel to, in other words, horizontal to the surface of the path 142. The substrate of the receiver module 20a and the substrate of the receiver module 20b are arranged so as to be orthogonal to, in other words, vertical to the surface of the path 142. The transmitter modules 10a and 10b, and the receiver modules 20a and 20b are arranged to form a cuboid antenna module 262.

In the transmitter modules 10a and 10b, sixteen transmit antennas 16 are arranged in a line at one end of each of the transmitter modules 10a and 10b (substrates). In the transmitter modules 20a and 20b, sixteen transmit antennas 26 are arranged in a line at one end of each of the transmitter modules 20a and 20b (substrates).

The transmitter modules 10a and 10b in the left enclosure 144 are arranged in a direction in which the transmit antennas 16 are opposed to the path 142. The receiver modules 20a and 20b in the left enclosure 144 are arranged in a direction in which the receive antennas 26 are opposed to the path 142.

The above arrangement of the transmitter modules 10a and 10b and the arrangement of the receiver modules 20a and 20b are examples. These modules may be arranged in arrangements other than the above, for example, may be arranged linearly in one or two lines, or be arranged simply in four lines. The transmit antennas 16 and the receive antennas 26 in the antenna module 262 may also be arranged in arrangements other than the above, for example, may be arranged linearly in one or two lines, or be arranged simply in four lines. Furthermore, a plurality of antenna modules 262 may be arranged in the enclosure 144.

The distributors 130 and 132 (not shown in FIG. 6) are also arranged in the left enclosure 144.

In the right enclosure 146, the substrate of the transmitter module 10c and the substrate of the transmitter module 10d are arranged so as to be parallel to, in other words, horizontal to the surface of the path 142. The substrate of the receiver module 20c and the substrate of the receiver module 20d are arranged so as to be orthogonal to, in other words, vertical to the surface of the path 142. The transmitter modules 10c and 10d and the receiver module 20c and 20d are arranged to form a cuboid antenna module 264.

In the transmitter modules 10c and 10d, sixteen transmit antennas 16 are arranged in a line at one end of each of the transmitter modules 10c and 10d (substrate). In the transmitter modules 20c and 20d, sixteen transmit antennas 26 are arranged in a line at one end of each of the transmitter modules 20c and 20d (substrate).

The transmitter modules 10c and 10d in the right enclosure 146 are arranged in a direction in which the transmit antennas 16 are opposed to the path 142. The transmitter modules 20c and 20d in the right enclosure 146 are arranged in a direction in which the transmit antennas 26 are opposed to the path 142.

The above arrangement of the transmitter modules 10c and 10d and the arrangement of the receiver modules 20c and 20d are examples. These modules may be arranged in arrangements other than the above, for example, may be arranged linearly in one or two lines, or be arranged simply in four lines. The transmit antennas 16 and the receive antennas 26 in the antenna module 264 may also be arranged in arrangements other than the above, for example, may be arranged linearly in one or two lines, or be arranged simply in four lines. Furthermore, a plurality of antenna modules 264 may be arranged in the enclosure 146.

The distributors 130 and 132 are arranged in the right enclosure 146.

The signal generator module 30 is connected to the distributors 130c and 132c. The clock signal output from the signal generator module 30 is supplied to the transmitter module 122 and the receiver unit 124. Therefore, the ICs 12 and 22 operate in synchronization with each other.

The transmission antenna 16 can transmit the electromagnetic wave parallel to the substrate. The radar signal transmitted from one transmit antenna 16 in the transmitter modules 10a and 10b in the left enclosure 144 propagates toward the path 142 and is reflected in a left area of the object 140 on the path 142. A reflected wave of the radar signal (hereinafter referred to as a reflected signal) propagates toward the left enclosure 144. The receive antenna 26 can receive the electromagnetic wave parallel to the substrate. The reflected signal is received by all of the receive antennas 26 of the receiver modules 20a and 20b in the left enclosure 144. The receiver modules 20a and 20b process the received signals and supply the processed received signals to the processor 90. The processor 90 inspects the belongings in the left area of the object 140 based on the received signals. The processor 90 may generate an image of the object 140 based on the received signals and inspect the belongings based on the image.

The radar signal transmitted from one transmit antenna 16 in the transmitter modules 10c and 10d in the right enclosure 146 propagates toward the path 142 and is reflected in a right area of the object 140 on the path 142. The reflected signal propagates toward the right enclosure 146. The reflected signal is received by all of the receive antennas 26 of the receiver modules 20c and 20d in the right enclosure 146. The receiver modules 20c and 20d process the received signals and supply the processed received signals to the processor 90. The processor 90 inspects the belongings in the right area of the object 140 based on the received signals. The processor 90 may generate an image of the object 140 based on the received signals and inspect the belongings based on the image.

FIG. 6 shows an example in which the antennas 16 and 26 and the ICs 12 and 22 (including the distributors 130 and 132) are formed integrally on the substrate of the module. The antennas 16 and 26 and the ICs 12 and 22 (including the distributors 130 and 132) may be formed on respective substrates.

An example of the transmit antenna 16 and the receive antenna 26 according to the first arrangement includes a patch antenna, a dipole antenna including a reflection plate, or a substrate integrated waveguide (SIW) aperture antenna. When one of the transmit antenna array and the receive antenna array is arranged horizontally and the other of the transmit antenna array and the receive antenna array is arranged vertically, as shown in FIG. 6, one antenna array is either the dipole antenna including the reflection plate or the SIW aperture antenna and the other antenna array is the other of the SIW aperture antenna or the dipole antenna including the reflection plate.

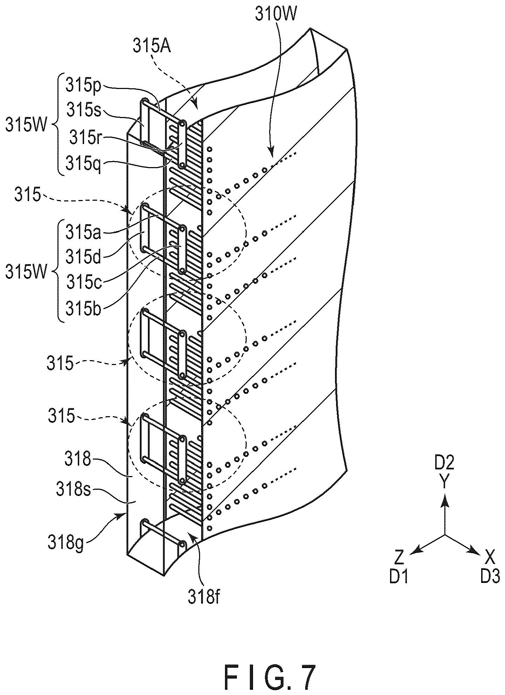

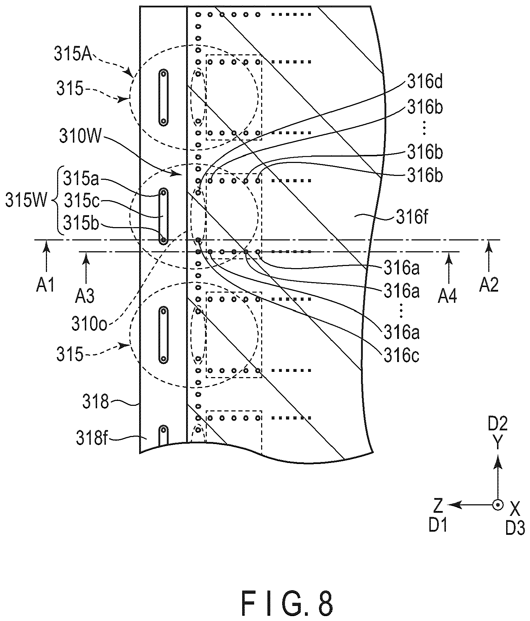

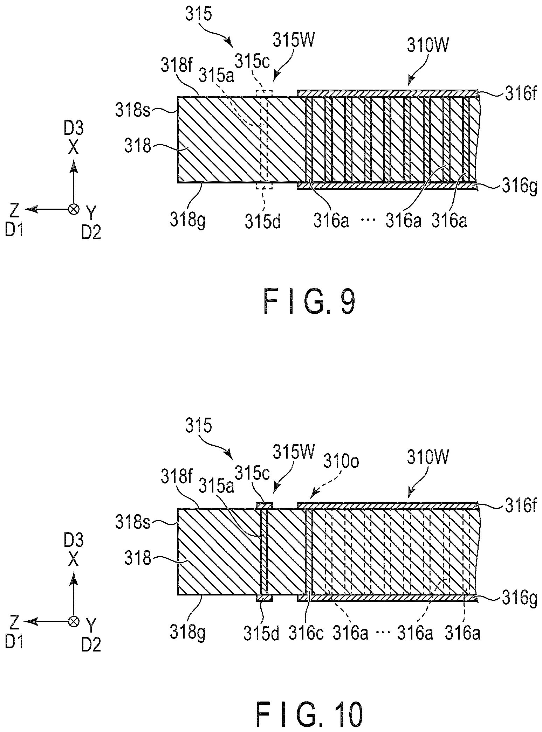

FIG. 7 is a schematic perspective view illustrating an example of the transmit antenna 16 or the receive antenna 26 including the SIW aperture antenna according to the first arrangement. FIG. 8 is a schematic plan view illustrating an example of the transmit antenna 16 or the receive antenna 26 according to the first arrangement. FIG. 9 is a schematic cross-sectional view illustrating an example of the transmit antenna 16 or the receive antenna 26 according to the first arrangement. FIG. 9 is a cross-sectional view along a line A1-A2 in FIG. 8. FIG. 10 is a schematic cross-sectional view illustrating an example of the transmit antenna 16 or the receive antenna 26 according to the first arrangement. FIG. 10 is a cross-sectional view along a line A3-A4 in FIG. 8.

A substrate 318 includes a plurality of antennas 315. The antenna 315 includes a first structure 310W. The first structure 310W is the SIW. The antenna 315 is the SIW aperture antenna.

The first structure 310W includes a first waveguide conductive layer 316f, another first waveguide conductive layer 316g, a plurality of first waveguide electrode portions 316a, and a plurality of second waveguide electrode portions 316b. The direction from the other first waveguide conductive layer 316g to the first waveguide conductive layer 316f is along the third direction D3. As shown in FIG. 8, the direction from the waveguide conductive electrode portions 316a to the waveguide conductive electrode portions 316b is along the second direction D2.

The first waveguide conductive layer 316f and the other first waveguide conductive layer 316g are electrically connected to each other by the first waveguide conductive electrode portions 316a and the second waveguide conductive electrode portions 316b. The first direction D1, the second direction D2, and the third direction D3 are orthogonal to one another. The third direction D3 may be referred to as the X-axis direction. In that case, the second direction D2 is referred to as the Y-axis direction and the first direction D1 is referred to as the Z-axis direction.

The first structure 310W may further include a third waveguide electrode portion 316c and a fourth waveguide electrode portion 316d. The third waveguide electrode portion 316c is electrically connected to the first waveguide conductive layer 316f and the other first wave guide conductive layer 316g. The fourth waveguide conductive electrode portion 316d is electrically connected to the first waveguide conductive layer 316f and the other first waveguide conductive layer 316g. The distance along the second direction D2 between the third waveguide conductive electrode portion 316c and the fourth waveguide conductive electrode portion 316d is shorter than the distance along the second direction D2 between the first waveguide conductive electrode portions 316a and the second waveguide conductive electrode portions 316b. The first structure 310W may not include the third waveguide electrode portion 316c and the fourth waveguide electrode portion 316d.

A part of the substrate 318 is arranged between the first waveguide conductive layer 316f and the other first waveguide conductive layer 316g and between the first waveguide conductive electrode portions 316a and the second waveguide conductive electrode portions 316b.

The first structure 310W includes an aperture 310o. The aperture 310o is arranged at an end of the first structure 310W in the first direction D1. The aperture 310o functions as an aperture antenna. The electromagnetic wave is irradiated from the aperture 310o.

The antenna 315 may include waveguides 315W. The waveguide 315W includes a first conductive layer 315c, another first conductive layer 315d, a first electrode portion 315a, and another first electrode portion 315b. The direction from the other first conductive layer 315d to the first conductive layer 315c is along the third direction D3. The direction from the other first electrode portion 315b to the first electrode portion 315a is along the second direction D2. The first conductive layer 315c and the other first conductive layer 315d are electrically connected to each other by the first electrode portion 315a and the other first electrode portion 315b.

At least a part of the substrate 318 is arranged between the first conductive layer 315c and the other first conductive layer 315d and between the first electrode portion 315a and the other first electrode portion 315b.

The position of the third waveguide electrode portion 316c in the first direction D1 is between the position of the first conductive layer 315c in the first direction D1 and the position of the first waveguide electrode portions 316a in the first direction D1. The position of the fourth waveguide electrode portion 316d in the first direction D1 is between the position of the first conductive layer 315c in the first direction D1 and the position of the second waveguide electrode portions 316b in the first direction D1. The first waveguide electrode portions 316a and the second waveguide electrode portions 316b that form the aperture 310o may be opposed to one of the waveguides 315W. The third waveguide electrode portion 316c and the fourth waveguide electrode portion 316d that form the aperture 310o may be opposed to one of the waveguides 315W.

The direction from the first waveguide conductive layer 316f to the first waveguide conductive layer 315c is along the first direction D1. The direction from the other first waveguide conductive layer 316g to the other first conductive layer 315d is along the first direction D1. For example, the other first conductive layer 316g may be a fixed potential (for example, a ground potential).

The substrate 318 has a first surface 318f and another first surface 318g. The direction from the other first surface 318g to the first surface 318f is along the third direction D3. The first conductive layer 315c is arranged at the first surface 318f. The other first conductive layer 315d is arranged at the other first surface 318g. One of the waveguides 315W extending along the third direction D3 in the substrate 318 can be coupled with one of the first structures 310W.

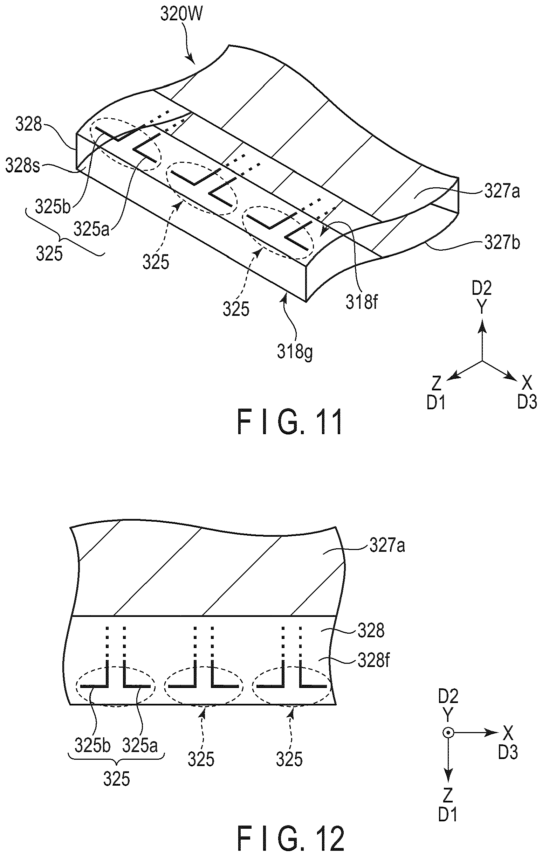

FIG. 11 is a schematic perspective diagram illustrating an example of the receive antenna 26 or the transmit antenna 16 including the dipole antenna including the reflection plate according to the first arrangement. FIG. 12 is a schematic plan view illustrating an example of the receive antenna 26 or the transmit antenna 16 according to the first arrangement.

The substrate 328 includes a plurality of antennas 325. The antenna 325 includes a second conductive layer 325a. At least a part of the second conductive layer 325a extends along the third direction D3. The antenna 325 may include another second conductive layer 325b. At least a part of the other second conductive layer 325b extends along the third direction D3. The direction from the other second conductive layer 325b to the second conductive layer 325a is along the third direction D3. The second conductive layer 325a and the other second conductive layer 325b constitute the dipole antenna. The antenna 325 is the dipole antenna including the reflection plate.

The second conductive layer 325a and the other second conductive layer 325b are arranged at the second surface 328f of the substrate 328.

The substrate 328 may include a second waveguide conductive layer 327a and another second waveguide conductive layer 327b. The direction from the other second waveguide conductive layer 327b to the second waveguide conductive layer 327a is along the second direction D2. A part of the substrate 328 is arranged between the other second waveguide conductive layer 327b and the second waveguide conductive layer 327a. The second waveguide conductive layer 327a can be coupled with the second conductive layer 325a (and the other second conductive layer 325b). For example, the other second waveguide conductive layer 327b may be the fixed potential (for example, the ground potential). A plurality of second waveguide conductive layers 327a may be arranged. One of the second waveguide conductive layers 327a can be coupled with the second conductive layer 325a (and the other second conductive layer 325b).

The substrate 328 may include another second surface 328g. The direction from the other second surface 328g to the second surface 328f is along the second direction D2. The second waveguide conductive layer 327a may be arranged at the second surface 328f. The other second waveguide conductive layer 327b may be arranged at the other second surface 328g.

The configurations of the transmit antenna 16 and the receive antenna 26 shown in FIG. 7 to FIG. 12 are examples, and the configurations are not limited to these examples.

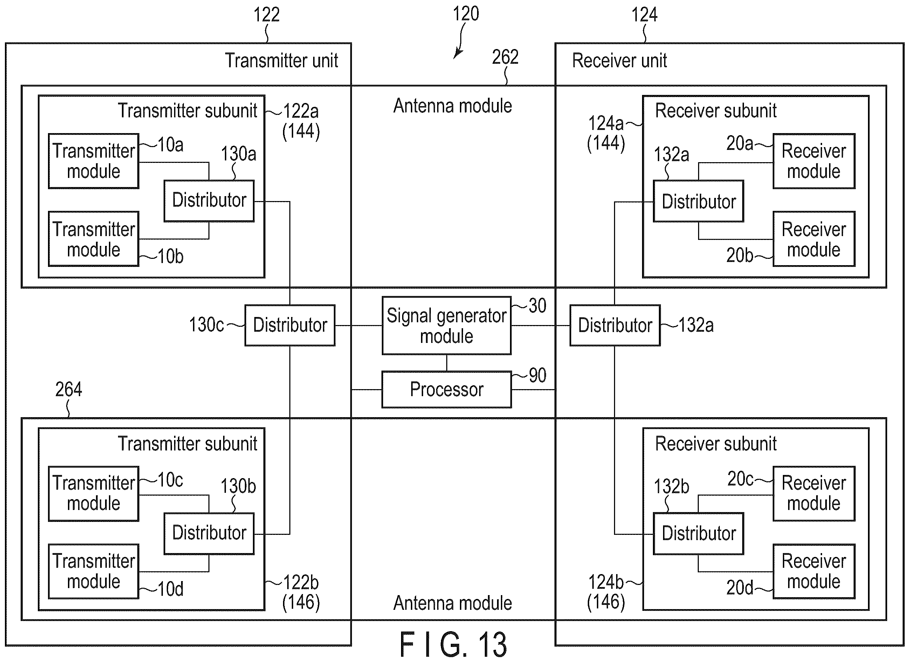

FIG. 13 is a block diagram illustrating an example of the electrical configuration of the radar device 120 shown in FIG. 6. The radar device 120 includes the transmitter unit 122, the receiver unit 124, the signal generator module 30, and the processor 90. The transmitter unit 122 is divided into two transmitter subunits 122a and 122b. The receiver unit 124 is divided into two receiver subunits 124a and 124b.

The transmitter subunit 122a is arranged in the left enclosure 144. The transmitter subunit 122a includes the transmitter modules 10a and 10b and the distributor 130a. The transmitter subunit 122b is arranged in the right enclosure 146. The transmitter subunit 122b includes the transmitter modules 10c and 10d and the distributor 130b. The distributor 130c is not arranged in either the left enclosure 144 or the right enclosure 146, but is arranged in the vicinity of the signal generator module 30. A first output terminal of the distributor 130c is connected to the transmitter subunit 122a (distributor 130a). A second output terminal of the distributor 130c is connected to the transmitter subunit 122b (distributor 130b).

The receiver subunit 124a is arranged in the left enclosure 144. The receiver subunit 124a includes the receiver modules 20a and 20b and the distributor 132a. The receiver subunit 124b is arranged in the right enclosure 146. The receiver subunit 124b includes the receiver modules 20c and 20d and the distributor 132b. The distributor 132c is not arranged in either the left enclosure 144 or the right enclosure 146, but is arranged in the vicinity of the signal generator module 30. A first output terminal of the distributor 132c is connected to the receiver subunit 124a (distributor 132a) and a second output terminal of the distributor 132c is connected to the receiver subunit 124b (distributor 132b).

The antenna module 262 arranged in the left enclosure 144 includes the transmitter subunit 122a and the receiver subunit 124a. The antenna module 264 arranged in the right enclosure 146 includes the transmitter subunit 122b and the receiver subunit 124b.

The radar devices 110 and 120 according to the first arrangement can inspect the belongings of the object 140 walking through the path 142. Since the object 140 does not need to stop for the inspection, the inspection throughput of the radars 110 and 120 is improved.

In order to further improve the inspection throughput, it is proposed to provide a plurality of radar devices to simultaneously inspect a plurality of objects on a plurality of inspection lanes. In this case, the number of the radar devices to be arranged increases in accordance with the number of the inspection lanes, increasing the cost. In addition, the entire inspection lanes expand due to the size of the enclosure of the radar device and the margin area between the radar devices (between the inspection lanes) for installation and maintenance purposes. Furthermore, since the operations between the radar devices adjacent to each other are in asynchronous, interference may occur at unexpected timing points between the radar devices, affecting the inspection results. The interference can be avoided by introducing the electromagnetic wave absorption material or the electromagnetic wave reflection control material between the radar devices, but the introduction of these materials leads to increases in cost and margin space.

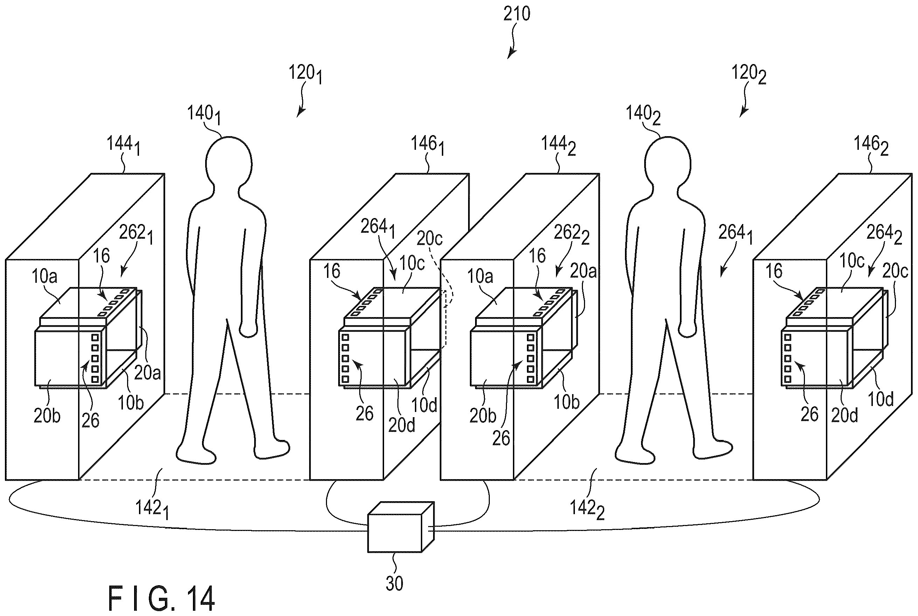

FIG. 14 is a perspective view illustrating an example of a walk-through type inspection device 210, which is an application example of the radar device according to the first arrangement. The inspection device 210 includes a plurality of radar devices 120 (FIG. 6) arranged along a plurality of paths. The inspection device 210 may include a plurality of radar devices 100 (FIG. 1) arranged along a plurality of paths, instead of the radar devices 120. For the sake of illustration, FIG. 14 shows the inspection device 210 including two lanes, but the inspection device 210 including three or more lanes is configured in the same manner. A first path $142_1$ and a second path $142_2$ are defined. The second path $142_2$ is arranged at the right of the first path $142_1$.

The first left enclosure $144_1$ is arranged at the left portion of the first path $142_1$. The first right enclosure $146_1$ is arranged at the right portion of the first path $142_1$. The second left enclosure $144_2$ is arranged at the left portion of the second path $142_2$. The second right enclosure $146_2$ is arranged at the right portion of the second path $142_2$. The first right enclosure $146_1$ and the second left enclosure $144_2$ do not need to be spaced apart, but may be in close contact with each other. In other words, the first right enclosure $146_1$ and the second left enclosure $144_2$ may be a single enclosure.

The configurations of the first left enclosure $144_1$ and the second left enclosure $144_2$ are the same as that of the left enclosure 144 shown in FIG. 6. The configurations of the first right enclosure $146_1$ and the second right enclosure $146_2$ are the same as that of the right enclosure 146 shown in FIG. 6.

The signal generator module 30 is connected to the first left enclosure $144_1$, the first right enclosure $146_1$, the second left enclosure $144_2$, and the second right enclosure $146_2$.

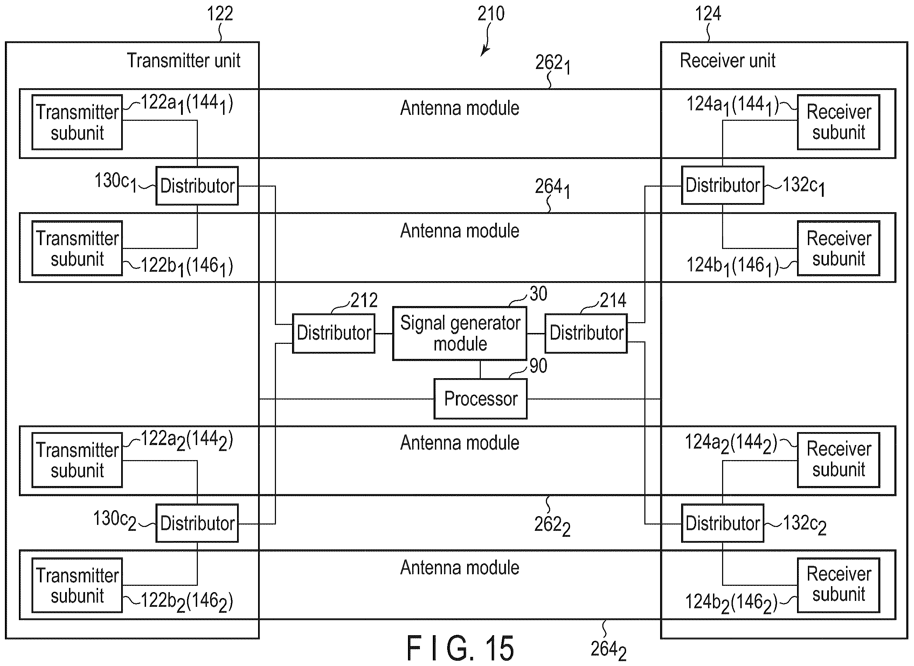

FIG. 15 is a block diagram illustrating an example of the electrical configuration of the inspection device 210 according to the first arrangement. The inspection device 210 includes the transmitter unit 122, the receiver unit 124, the signal generator module 30, and the processor 90.

The transmitter unit 122 includes four transmitter subunit $122a_1$, $122b_1$, $122a_2$, and $122b_2$. The configurations of the transmitter subunits $122a_1$ and $122a_2$ are the same as that of the transmitter subunit 122a in the left enclosure 144 shown in FIG. 13. The configurations of the transmitter subunits $122b_1$ and $122b_2$ are the same as that of the transmitter subunit 122b in the right enclosure 146 shown in FIG. 13. The transmitter unit 122 further includes distributors $130c_1$ and $130c_2$.

The receiver unit 124 includes four receiver subunits $124a_1$, $124b_1$, $124a_2$, and $124b_2$. The configurations of the receiver subunits $124a_1$ and $124a_2$ are the same as that of the receiver subunit 124a in the left enclosure 144 shown in FIG. 13. The configurations of the receiver subunits $124b_1$ and $124b_2$ are the same as that of the receiver subunit 124b in the right enclosure 146 shown in FIG. 13. The receiver unit 124 further includes distributors $132c_1$ and $132c_2$.

A first output signal of the signal generator module 30 is supplied to a distributor 212. A second output signal of the signal generator module 30 is supplied to a distributor 214. The two output signals of the distributor 212 are supplied to the distributors $130c_1$ and $130c_2$, respectively. The two output signals of the distributor 214 are supplied to the distributors

$132c_1$ and $132c_2$, respectively. The distributors $130c_1$ and $130c_2$ are not arranged in the inside of any of the first left enclosure $144_1$, the first right enclosure $146_1$, the second left enclosure $144_2$, or the second right enclosure $146_2$, but are arranged in the vicinity of the distributor 212. The distributors $132c_1$ and $132c_2$ are not arranged in the inside of any of the first left enclosure $144_1$, the first right enclosure $146_1$, the second left enclosure $144_2$, or the second right enclosure $146_2$, but are arranged in the vicinity of the distributor 214.

The transmitter subunit $122a_1$ and the receiver subunit $124a_1$ are arranged in the left enclosure $144_1$ of the first path $142_1$. The transmitter subunit $122b_1$ and the receiver subunit $124b_1$ are arranged in the right enclosure $146_1$ of the first path $142_1$. The transmitter subunit $122a_2$ and the receiver subunit $124a_2$ are arranged in the left enclosure $144_2$ of the second path $142_2$. The transmitter subunit $122b_2$ and the receiver subunit $124b_2$ are arranged in the right enclosure $146_2$ of the second path $142_2$.

An antenna module $262_1$ arranged in the first left enclosure $144_1$ includes the transmitter subunit $122a_1$ and the receiver subunit $124a_1$. An antenna module $264_1$ arranged in the first right enclosure $146_1$ includes the transmitter subunit $122b_1$ and the receiver subunit $124b_1$. An antenna module $262_2$ arranged in the second left enclosure $144_2$ includes the transmitter subunit $122a_2$ and the receiver subunit $124a_2$. An antenna module $264_2$ arranged in the second right enclosure $146_2$ includes the transmitter subunit $122b_2$ and the receiver subunit $124b_2$.

In the antenna modules $262_1$, $264_1$, $262_2$, and $264_2$, all of the transmitter modules 10 and the receiver modules 20 are controlled by the chirp signal and the clock signal supplied from the signal generator module 30 and the trigger signal supplied from the processor 90. Thus, since the signal generator module 30 is used in common for a plurality of inspection lanes, the cost can be reduced, and since the inspection lanes are in synchronization, the effects of unexpected interference can be suppressed.

In order to avoid mutual interference due to the transmit antennas 16 transmitting the radar signals at the same timing, the processor 90 selectively supplies the trigger signal to parts of the transmitter modules 10 such that the transmit antennas 16 are separately driven for a certain part. An example of the parts includes time, frequency, and codes.

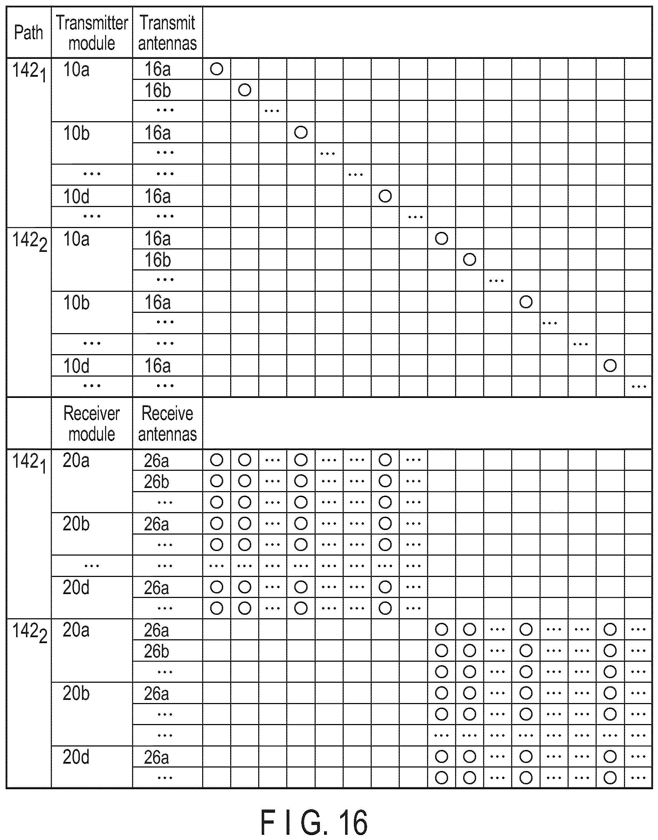

FIG. 16 is a diagram illustrating an example of transmission/reception sequence of the inspection device 210 according to the first arrangement. FIG. 16 shows an example of time division transmission of the radar signal. The processor 90 supplies the trigger signal to the transmitter module such that the antenna module $262_1$ arranged in the first left enclosure $144_1$ and the antenna module $264_1$ arranged in the first right enclosure $146_1$ are sequentially driven for the inspection of the second path $142_1$. Next, the processor 90 supplies the trigger signal to the transmitter module such that the antenna module $262_2$ arranged in the second left enclosure $144_2$ and the antenna module $264_2$ arranged in the second right enclosure $146_2$ are sequentially driven for the inspection of the second path $142_2$.

More specifically, for the inspection of the first path $142_1$, the processor 90 supplies the trigger signal to the antenna module 10a in the antenna module $262_1$ arranged in the first left enclosure $144_1$. The transmitter module 10a causes the transmit antennas 16a, 16b, to sequentially transmit the radar signals toward the first path $142_1$. Next, the processor 90 supplies the trigger signal to the transmitter module 10b in the antenna module $262_1$. The transmitter module 10b causes the transmit antennas 16a, to sequentially transmit the radar signals toward the first path $142_1$. Next, the processor 90 supplies the trigger signal to the transmitter module 10c in the antenna module $264_1$ arranged in the first right enclosure $146_1$. The transmitter module 10c causes the transmit antennas 16a, 16b, to sequentially transmit the radar signals toward the first path $142_1$. Next, the processor 90 supplies the trigger signal to the transmitter module 10d in the antenna module $264_1$. The transmitter module 10d causes the transmit antennas 16a, to sequentially transmit the radar signals toward the first corridor $142_1$.

When the transmit antennas 16 in the antenna module $262_1$ transmit the radar signals, the processor 90 causes all of the receive antennas 26a to 26p in all of the receiver modules 20a, 20b, 20c, and 20d in the antenna module $262_1$ to receive the reflected signals from the first path $142_1$. Thus, the inspection of the first path $142_1$ finishes.

Thereafter, the processor 90 supplies the trigger signal to the transmitter module 10a in the antenna module $262_2$ arranged in the second left enclosure $144_2$, for the inspection of the second path $142_2$. The transmitter module 10a causes the transmit antennas 16a, 16b, to sequentially transmit the radar signals toward the second path $142_2$. Next, the processor 90 supplies the trigger signal to the transmitter module 10b in the antenna module $262_2$. The transmitter module 10b causes the transmit antennas 16a, to sequentially transmit the radar signals toward the second path $142_2$. Next, the processor 90 supplies the trigger signal to the transmitter module 10c in the antenna module $264_2$ arranged in the second right enclosure $146_2$. The transmitter module 10c causes the transmit antennas 16a, 16b, to sequentially transmit the radar signals toward the second path $142_2$. Next, the processor 90 supplies the trigger signal to the transmitter module 10d in the antenna module $264_2$. The transmitter module 10d causes the transmit antennas 16a, to sequentially transmit the radar signals toward the second path $142_2$.

When the transmit antennas 16 in the antenna module $262_2$ transmit the radar signals, the processor 90 causes all of the receive antennas 26a to 26p in all of the receiver modules 20a, 20b, 20c, and 20d in the antenna module $262_2$ to receive the reflected signals from the second path $142_2$. Thus, the inspection of the second path $142_2$ finishes.

In such a time division driving, when the number of the inspection lanes (paths) is increased, the available time of the inspection of each lane is restricted, decreasing the inspection efficiency. The same applies in the cases of the frequency division transmission and the code division transmission.

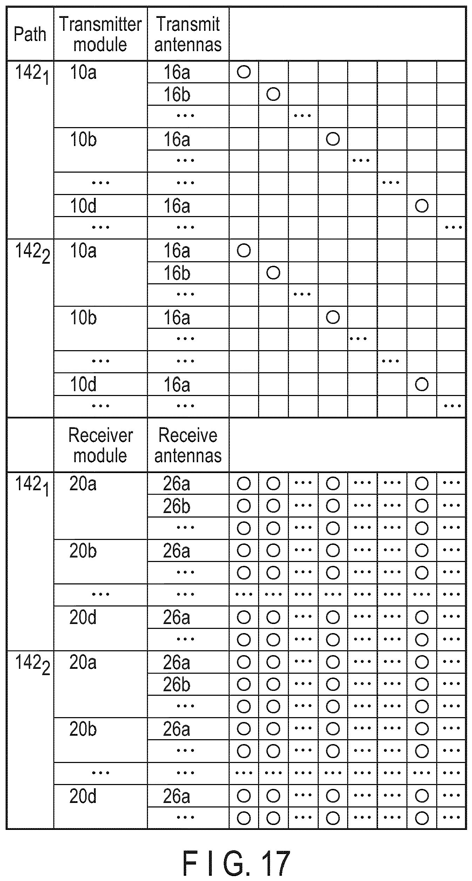

For avoiding this, it is proposed to perform inspections of a plurality of lanes simultaneously. FIG. 17 illustrates another example of the transmission/reception sequence of the inspection device 210 according to the first arrangement. FIG. 17 shows an example of simultaneous transmission of the radar signals to a plurality of lanes. The processor 90 simultaneously drives the antenna module $262_1$ arranged in the first left enclosure $144_1$ and the antenna module $262_2$ arranged in the second left enclosure $144_2$, and then simultaneously drives the antenna module $264_1$ arranged in the first right enclosure $146_1$ and the antenna module $264_2$ arranged in the second right enclosure $146_2$.

In this specification, simultaneous is not limited to strict simultaneous, but includes a case where the timing of the start of driving the antenna module $264_1$ in the first right enclosure $146_1$ and the timing of the start of driving the antenna module $264_2$ in the second right enclosure $146_2$ are sifted by a few seconds.

More specifically, the processor 90 supplies the trigger signals to the transmitter modules 10a and 10b in the antenna module $262_1$ arranged in the first left enclosure $144_1$ and the transmitter modules 10c and 10d in the antenna module $264_1$ arranged in the first right enclosure $146_1$ for the inspection of the first path $142_1$. Simultaneously, the processor 90 supplies the trigger signals to the transmitter modules 10a and 10b in the antenna module $262_2$ arranged in the second left enclosure $144_2$ and the transmitter modules 10c and 10d in the antenna module $264_2$ arranged in the second right enclosure $146_2$ for the inspection of the second path $142_2$. Thus, the transmitter modules 10a and 10b in the antenna module $262_1$ cause the antenna modules 16a, 16b, ... to sequentially transmit the radar signals toward the first path $142_1$, and the transmitter modules 10c and 10d in the antenna module $264_1$ cause the antenna modules 16a, 16b, ... to sequentially transmit the radar signals toward the first path $142_1$.

When the transmit antennas 16 in the antenna modules $262_1$ and $262_2$ transmit the radar signals, the processor 90 causes all of the receive antennas 26 in the antenna modules $262_1$ and $262_2$ to receive the reflected signals.

By transmitting the radar signals simultaneously for a plurality of lanes in this manner, a decrease in the inspection efficiency can be avoided even when the signal generator module 30 is used in common for the inspection of a plurality of lanes.

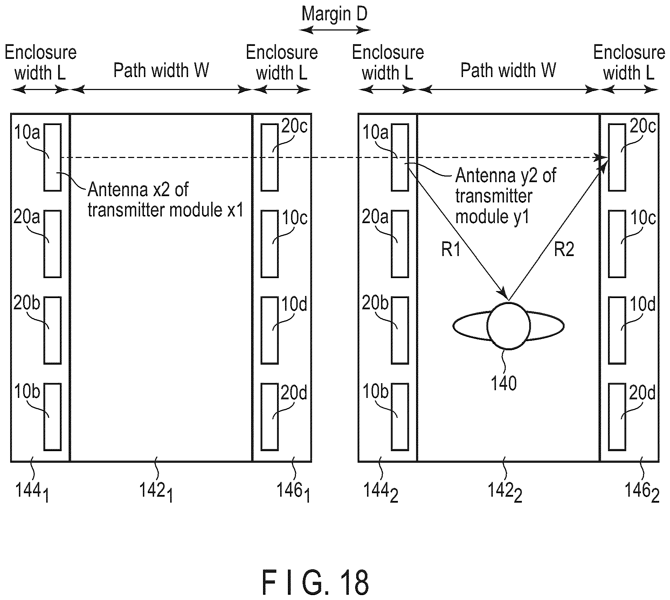

When a plurality of radar devices are arranged in lines, the radar signals of two adjacent radar devices may interference with each other. FIG. 18 illustrates an example of possible interference of the radar devices according to the first arrangement. FIG. 18 illustrates the conditions under which the radar signal transmitted from a transmit antenna x2 of a transmitter module x1 for the first path $142_1$ interferes with a reflected wave (reflected signal) of the radar signal transmitted from a transmit antenna y2 of a transmitter module y1 for the second path $142_2$. In a case where a shortest path length U (2W + 2L + D in FIG. 18) in which the radar signal transmitted from the transmit antenna x2 of the transmitter module x1 for the first path $142_1$ propagates directly to a specific receive antenna for the second path $142_2$ is the same as the sum of a distance R1 from the transmit antenna y2 of the transmitter module y1 for the second path $142_2$ to the object 140 and a distance R2 from the object 140 to a specific receive antenna, the interference occurs. In other words, the interference occurs when the difference between 2W + 2L + D and (R1 + R2) is smaller than the distance resolution $\Delta R$ of the radar device, as shown in Formula 1.

$$(2W + 2L + D) - (R1 + R2) \leq \Delta R \quad \text{Formula 1}$$

W is a path width, L is a width of the enclosure 144 or 146, and D is an interval (margin) between the first right enclosure $146_1$ and the second left enclosure $144_2$.

R1 and R2 are variable depending on the position of the object 140 on the second path $142_2$. The maximum value of the sum of R1 and R2 can be designed in advance by adjusting the viewing angles of the transmit antenna and the receive antenna. When the radar device is arranged such that the maximum value of the sum of R1 and R2 is smaller than 2W + 2L + D, the received data at unnecessary distances can be ignored from the range data. Therefore, the interference between the paths can be avoided even when the transmission/reception sequence in FIG. 17 is used.

In order to avoid the interference, the path width W, the enclosure width L, and/or the margin D is set such that the condition of Formula 2 is satisfied.

$$(2W + 2L + D) - (R1 + R2) \geq \alpha \quad \text{Formula 2}$$

In the above Formula 2, $\alpha$ is a value greater than $\Delta R$.

According to the first arrangement, the cost of the radar device can be reduced by using the signal generator module 30 in common for the radar devices in a plurality of inspection lanes (paths). In addition, by appropriately setting the width of the inspection lanes, the width of the enclosure, and the margin between the lanes, the operation that does not decrease the inspection efficiency can be performed even without using complicated scheduling of the transmission timing for the transmission antennas in each of the inspection lanes.

[Second Arrangement]

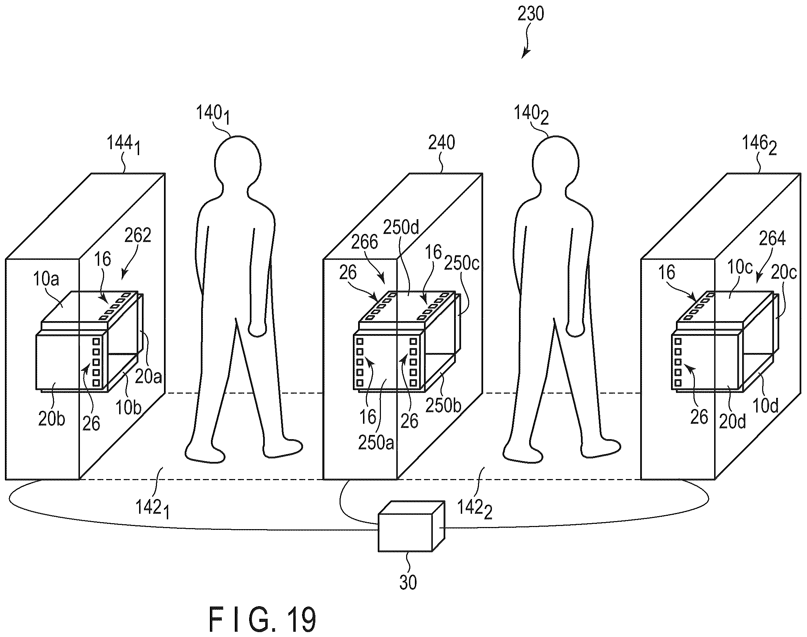

FIG. 19 is a perspective view illustrating an example of a walk-through type inspection device 230 according to the second arrangement. The inspection device 230 includes a plurality of radar devices arranged along a plurality of paths. For the sake of illustration, FIG. 19 shows the inspection device 230 including two lanes, but the inspection device including three or more lanes is configured in the same manner.

The first left enclosure $144_1$ is arranged at the left portion of the first path $142_1$. An enclosure 240 is arranged between the first path $142_1$ and the second path $142_2$. The second right enclosure $146_2$ is arranged at the right portion of the second path $142_2$.

The configuration of the first left enclosure $144_1$ is the same as that of the left enclosure 144 according to the first arrangement. The configuration of the second right enclosure $146_2$ is the same as that of the right enclosure 146 according to the first arrangement. The enclosure 240 includes both of the function of the first right enclosure $146_1$ and the function of the second left enclosure $144_2$ according to the first arrangement. While each of the first right enclosure $146_1$ and the second left enclosure $144_2$ according to the first arrangement includes antenna modules 262 and 264 including a transmitter module and a receiver module, the enclosure 240 according to the second arrangement includes an antenna module 266 including a transmitter/receiver module.

In the enclosure 240, a substrate of a transmitter/receiver module 250d and a substrate of a transmitter/receiver module 250b are arranged so as to be parallel to, in other words, horizontal to the surfaces of the paths $142_1$ and $142_2$. A substrate of a transmitter/receiver module 250a and a substrate of a transmitter/receiver module 250c are arranged so as to be orthogonal to, in other words, vertical to the surfaces of the paths $142_1$ and $142_2$. The transmitter/receiver modules 250a, 250b, 250c, and 250d are arranged to form a cuboid antenna module 266.

In the transmitter/receiver modules 250a and 250c, thirty-two transmit antennas 16 are provided as a transmit antenna array in a line at one end of the transmitter/receiver modules 250a and 250c (substrate) and thirty-two receive antennas 26 are provided as a receive antenna array in a line at the other end of the transmitter/receiver modules 250a and 250c (substrate). In the transmitter/receiver modules 250b and 250d, thirty-two receive antennas 26 are provided as a receive antenna array in a line at one end of the transmitter/receiver modules 250b and 250d (substrate) and thirty-two transmit antennas 16 are provided as a transmit antenna array in a line at the other end of the transmitter/receiver modules 250b and 250d (substrate).

The transmitter/receiver modules 250a and 250c are arranged in a direction in which the transmit antenna 16 is opposed to the path $142_1$ and the receive antenna 26 is opposed to the path $142_2$. The transmitter/receiver modules 250b and 250d are arranged in a direction in which the transmit antenna 16 is opposed to the path $142_2$ and the receive antenna 26 is opposed to the path $142_1$.

The above arrangements of the transmitter/receiver modules 250a, 250b, 250c, and 250d are examples. The transmitter/receiver modules 250a, 250b, 250c, and 250d may be arranged other than the above, for example, in one or two straight lines, or simply in four lines. The transmit antennas 16 and the receive antennas 26 in the antenna modules 262, 264, and 266 may also be arranged other than the above, for example in one or two straight lines, or simply in four lines. A plurality of antenna modules 262, 264, and 266 may be arranged in the enclosure $144_1$, $146_2$, and 240, respectively.

The signal generator module 30 is connected to the first left enclosure $144_1$, the enclosure 240, and the second right enclosure $146_2$.

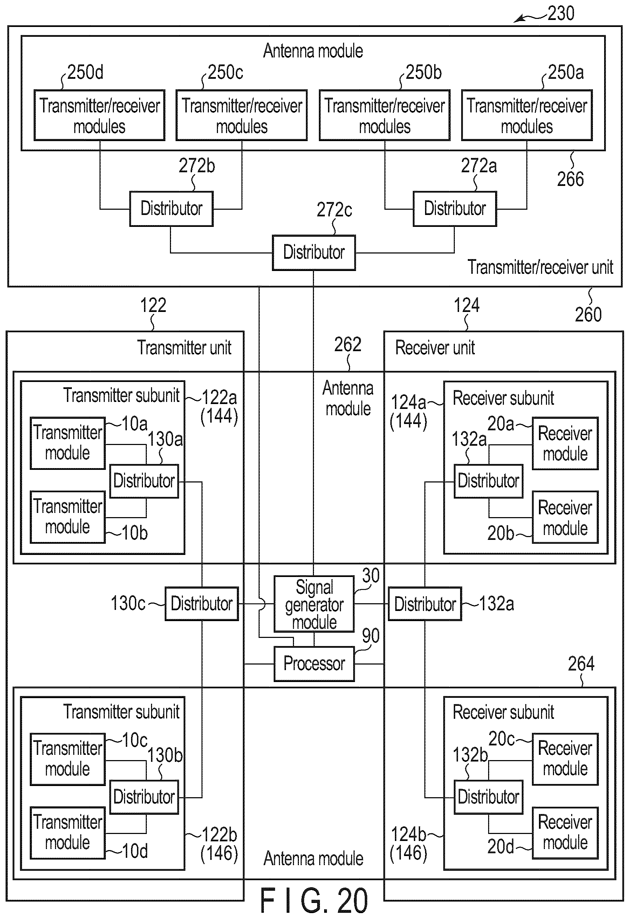

FIG. 20 is a block diagram illustrating an example of the electrical configuration of the inspection device 230 according to the second arrangement. The inspection device 230 includes the transmitter unit 122, the receiver unit 124, the transmitter/receiver unit 260, the signal generator module 30, and the processor 90.

The configuration of the transmitter unit 122 is the same as that of the transmitter unit 122 shown in FIG. 13. The configuration of the receiver unit 124 is the same as that of the receiver unit 124 shown in FIG. 13.

The transmitter/receiver unit 260 includes the transmitter/receiver modules 250a, 250b, 250c, and 250d and distributors 272a, 272b, and 272c.

A first output signal of the signal generator module 30 is supplied to the transmitter unit 122 (distributor 130c). A second output signal of the signal generator module 30 is supplied to the receiver unit 124 (distributor 132c). A third output signal of the signal generator module 30 is supplied to the transmitter/receiver unit 260 (distributor 272c).

The first output signal of the distributor 272c is supplied to the distributor 272a. The first output signal of the distributor 272a is supplied to the transmitter/receiver module 250a. The second output signal of the distributor 272a is supplied to the transmitter/receiver module 250b. The second output signal of the distributor 272c is supplied to the distributor 272b. The first output signal of the distributor 272b is supplied to the transmitter/receiver module 250c. The second output signal of the distributor 272b is supplied to the transmitter/receiver module 250d.

The inspection device 230 includes the three antenna modules 262, 264, and 266. The antenna module 262 inspects the first path $142_1$. The antenna module 264 inspects the second path $142_2$. The antenna module 266 includes the transmitter/receiver modules 250a, 250b, 250c, and 250d. The antenna module 266 inspects the first path $142_1$ and the

second path $142_2$ and is arranged in the enclosure 240.

The clock signal from the same signal generator module 30 is supplied to the antenna module 262 for the inspection of the first path $142_1$, the antenna module 264 for the inspection of the second path $142_2$, and the antenna module 266 for the inspection of the first path $142_1$ and the second path $142_2$. Therefore, the transmissions of the radar signals for the inspection of the two paths are synchronized and the receptions of the reflected signals are synchronized.

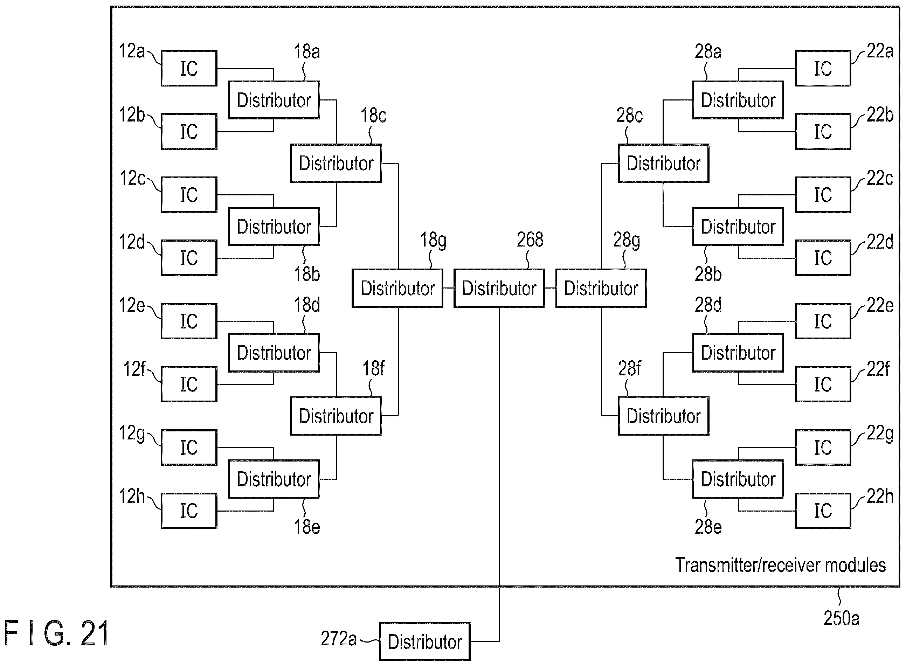

FIG. 21 is a block diagram illustrating an example of the transmitter/receiver module 250 according to the second arrangement. FIG. 21 illustrates the transmitter/receiver module 250a. The other transmitter/receiver modules 250b, 250c, and 250d have the same configuration.

The transmitter/receiver module 250a includes eight ICs 12a, 12b, 12c, 12d, 12e, 12f, 12g, and 12h for transmission and eight ICs 22a, 22b, 22c, 22d, 22e, 22f, 22g, and 22h for reception. The first output signal of the distributor 272a is supplied to a distributor 268. The first output signal of the distributor 268 is supplied to a distributor 18g. The second output signal of the distributor 268 is supplied to a distributor 28g.

The first output signal of the distributor 18g is supplied to a distributor 18c. The second output signal of the distributor 18g is supplied to a distributor 18f. The first output signal of the distributor 18c is supplied to a distributor 18a. The second output signal of the distributor 18c is supplied to a distributor 18b. The first output signal of the distributor 18f is supplied to a distributor 18d. The second output signal of the distributor 18f is supplied to a distributor 18e. The first output signal of the distributor 18a is supplied to the IC 12a. The second output signal of the distributor 18a is supplied to the IC 12b. The first output signal of the distributor 18b is supplied to the IC 12c. The second output signal of the distributor 18b is supplied to the IC 12d. The first output signal of the distributor 18d is supplied to the IC 12e. The second output signal of the distributor 18d is supplied to the IC 12f. The first output signal of the distributor 18e is supplied to the IC 12g. The second output signal of the distributor 18e is supplied to the IC 12h.

The first output signal of the distributor 28g is supplied to a distributor 28c. The second output signal of the distributor 28g is supplied to a distributor 28f. The first output signal of the distributor 28c is supplied to a distributor 28a. The second output signal of the distributor 28c is supplied to a distributor 28b. The first output signal of the distributor 28f is supplied to a distributor 28d. The second output signal of the distributor 28f is supplied to a distributor 28e. The first output signal of the distributor 28a is supplied to the IC 22a. The second output signal of the distributor 28a is supplied to the IC 22b. The first output signal of the distributor 28b is supplied to the IC 22c. The second output signal of the distributor 28b is supplied to the IC 22d. The first output signal of the distributor 28d is supplied to the IC 22e. The second output signal of the distributor 28d is supplied to the IC 22f. The first output signal of the distributor 28e is supplied to the IC 22g. The second output signal of the distributor 28e is supplied to the IC 22h. The clock signal from the signal generator module 30 is supplied to all of the ICs 12 for the transmission and the ICs 22 for the reception.

In the inspection device 230, all of the transmitter modules 10, the receiver modules 20, and the transmitter/receiver modules 250 are controlled by the clock signal output by the signal generator module 30. Therefore, the signal generator module 30 is used in common for a plurality of inspection lanes, reducing the cost.

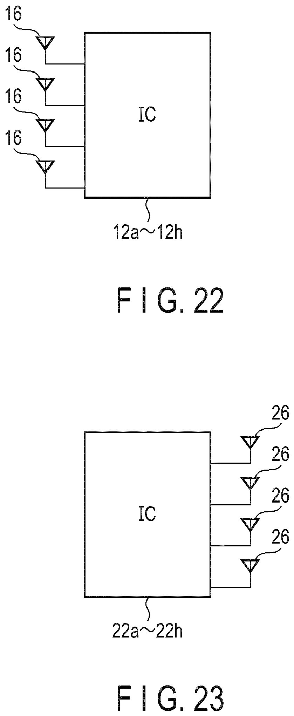

FIG. 22 is a diagram illustrating an example of the connection between the IC 12 and the transmit antennas 16 according to the second arrangement. Each of the ICs 12a to 12h is connected to four transmit antennas 16.

FIG. 23 is a diagram illustrating an example of the connection between the IC 22 and the receive antennas 26 according to the second arrangement. Each of the ICs 22a to 22h is connected to four transmit antennas 16.

Thus, one transmitter/receiver module 250 includes thirty-two transmit antennas 16 and thirty-two receive antennas 26.

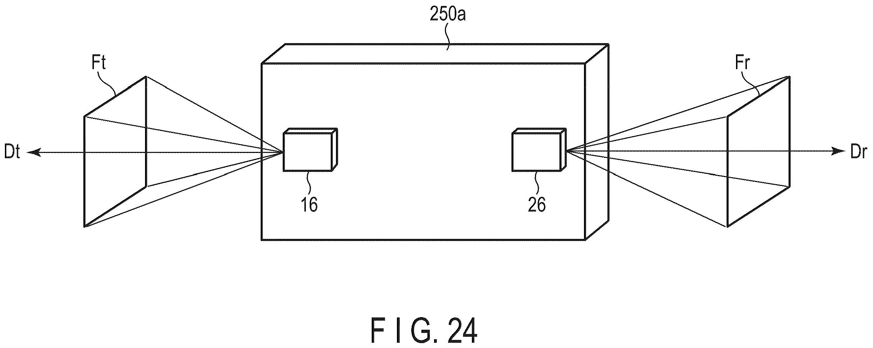

FIG. 24 illustrates an example of the transmit direction and the receive direction of the transmitter/receiver module 250 according to the second arrangement. The transmit antenna 16 and the receive antenna 26 are arranged at end portions opposed to each other of the substrate of the transmitter/receiver module 250. The transmit antenna 16 transmits the radar signal in a viewing angle Ft around a direction Dt of the main lobe of the radiation pattern. The receive antenna 26 receives the reflected signal in a viewing angle Fr around a direction Dr of the main lobe of the radiation pattern. The transmit antenna 16 and the receive antenna 26 are arranged such that an example of the angle formed by the direction Dt of the main lobe of the transmit antenna 16 and the direction Dr of the main lobe of the receive antenna 26 is 90 degrees or more and 180 degrees or less. The angle may be 170 degrees or more and 180 degrees or less. When the direction Dt and the direction Dr have such a relationship, the viewing angle Ft and the viewing angle Fr do not overlap. Therefore, the reflected signal of the radar signal transmitted from the transmit antenna 16 of each of the transmitter/receiver modules 250 cannot be received by the receive antenna 26 of the transmitter/receiver modules 250.

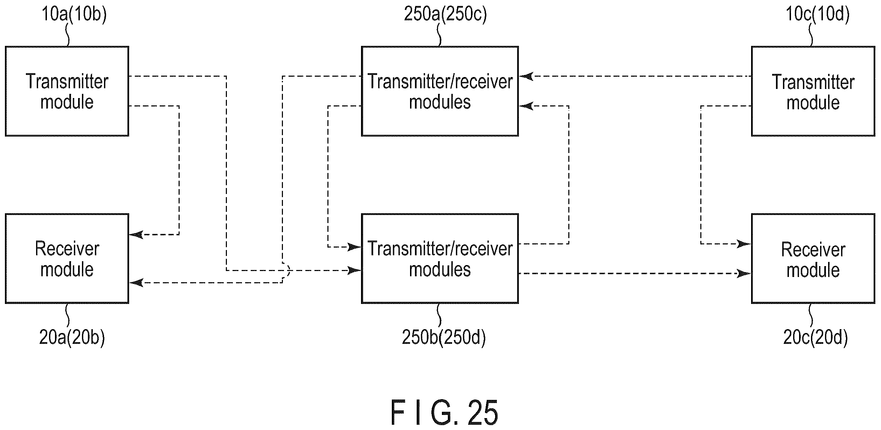

FIG. 25 illustrates a part of the transmission/reception sequence of the radar signal of the inspection device 230 according to the second arrangement.

During the inspection of the first path $142_1$, the radar signal transmitted by the transmitter module 10a or 10b arranged in the first left enclosure $144_1$ is reflected by the object $140_1$. The reflected signal can be received by the receiver modules 20a and 20b arranged in the first left enclosure $144_1$. When the object $140_1$ is not present, the direct wave of the radar signal transmitted by the transmitter module 10a or 10b arranged in the first left enclosure $144_1$ can be received by the transmitter/receiver modules 250b and 250d arranged in the enclosure 240.

During the inspection of the first path $142_1$, the radar signal transmitted by the transmitter/receiver module 250a or 250c arranged in the enclosure 240 is reflected by the object $140_1$. The reflected signal can be received by the other transmitter/receiver module 250b or 250d arranged in the enclosure 240. The radar signal transmitted by the transmitter/receiver module 250a or 250c cannot be received by the transmitter/receiver module 250a or 250c itself. When the object $140_1$ is not present, the direct wave of the radar signal transmitted by the transmitter/receiver module 250b or 250d arranged in the enclosure 240 can be received by the receiver modules 20a and 20b arranged in the first left enclosure $144_1$.

During the inspection of the second path $142_2$, the radar signal transmitted by the transmitter/receiver module 250b or 250d arranged in the enclosure 240 is reflected by the object $140_2$. The reflected signal can be received by the transmitter/receiver modules 250a and 250c arranged in the enclosure 240. The radar signal transmitted by the transmitter/receiver module 250b or 250d cannot be received by the transmitter/receiver module 250b or 250d itself. When the object $140_2$ is not present, the radar signal transmitted by the transmitter/receiver module 250b or 250d arranged in the enclosure 240 can be received by the receiver modules 20c and 20d arranged in the second right enclosure $146_2$.

During the inspection of the second path $142_2$, the radar signal transmitted by the transmitter module 10c or 10d arranged in the second right enclosure $146_2$ is reflected by the object $140_2$. The reflected signal is received by the receiver modules 20c and 20d arranged in the second right enclosure $146_2$. When the object $140_2$ is not present, the radar signal transmitted by the transmitter module 10c or 10d arranged in the second right enclosure $146_2$ can be received by the transmitter/receiver modules 250a and 250c arranged in the enclosure 240.

In the inspection device 230 according to the second arrangement, the transmission and reception of the first left enclosure $144_1$ and the second right enclosure $146_2$ that include the transmitter module 10 and the receiver module 20 as separate modules is different from the transmission and reception of the enclosure 240 that includes the transmitter/receiver module 250. The receiver module 20 arranged in the first left enclosure $144_1$ or the second right enclosure $146_2$ can receive the reflected signal of the radar signal transmitted from the transmitter module 10 arranged in the same enclosure. However, the transmitter/receiver module 205 arranged in the enclosure 240 cannot receive the reflected signal of the radar signal transmitted from the transmitter/receiver module arranged in the same enclosure.

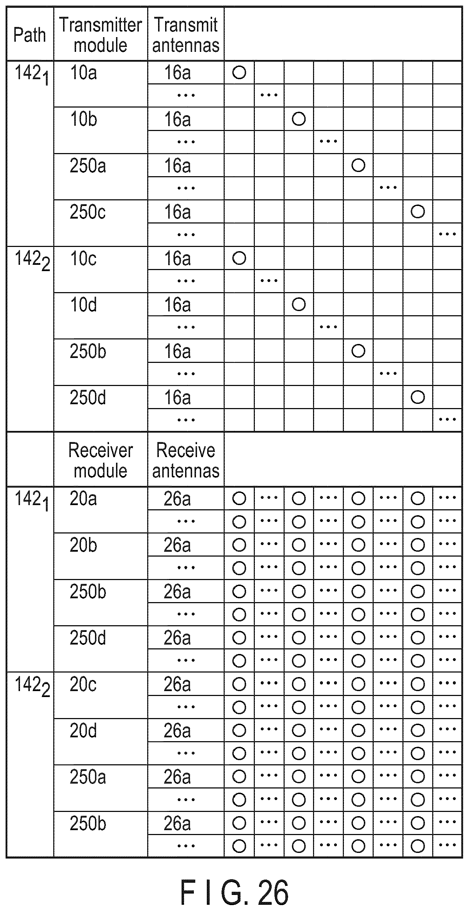

FIG. 26 shows an example of the transmission/reception sequence of the inspection device 230 according to the second arrangement. The processor 90 simultaneously drives the antenna module 262 arranged in the first left enclosure $144_1$ and the antenna module 264 arranged in the second right enclosure $146_2$ and then drives the antenna module 266 arranged in the enclosure 240.

More specifically, the processor 90 supplies the trigger signals to the transmitter modules 10a and 10b in the antenna module 262 arranged in the first left enclosure $144_1$ and simultaneously supplies the trigger signals to the transmitter modules 10c and 10d in the antenna module 264 arranged in the second right enclosure $146_2$. Thus, the transmitter modules 10a and 10b in the antenna module 262 cause the transmit antennas 16a, 16b, ... to sequentially transmit the radar signals toward the first path $142_1$, and simultaneously the transmitter modules 10c and 10d in the antenna module 264 cause the transmit antennas 16a, 16b, ... to sequentially transmit the radar signals toward the second path $142_2$.

Next, the processor 90 supplies the trigger signals to the transmitter/receiver modules 250a and 250c in the antenna module 266 arranged in the enclosure 240, and simultaneously supplies the trigger signals to the transmitter/receiver modules 250b and 250d in the antenna module 266. Thus, the transmitter/receiver modules 250a and 250c in the antenna module 266 cause the transmit antennas 16a, 16b, ... to sequentially transmit the radar signals toward the first path $142_1$, and simultaneously, the transmitter/receiver modules 250b and 250d in the antenna module 266 cause the transmit antennas 16a, 16b, ... to sequentially transmit the radar signals toward the second path $142_2$.

When the transmit antennas 16 in the antenna modules 262, 264, and 266 transmit the radar signals, the processor 90 causes all of the receive antennas 26 in the antenna modules 262, 264, and 266 to receive the reflected signals.

By transmitting the radar signals simultaneously for a plurality of lanes in this manner, a decrease in the inspection efficiency can be avoided even when the signal generator module 30 is used in common for the inspection of a plurality of lanes. As described above, simultaneous includes the case where the timing points of the start of the transmission for two adjacent lanes are shifted by a few seconds.

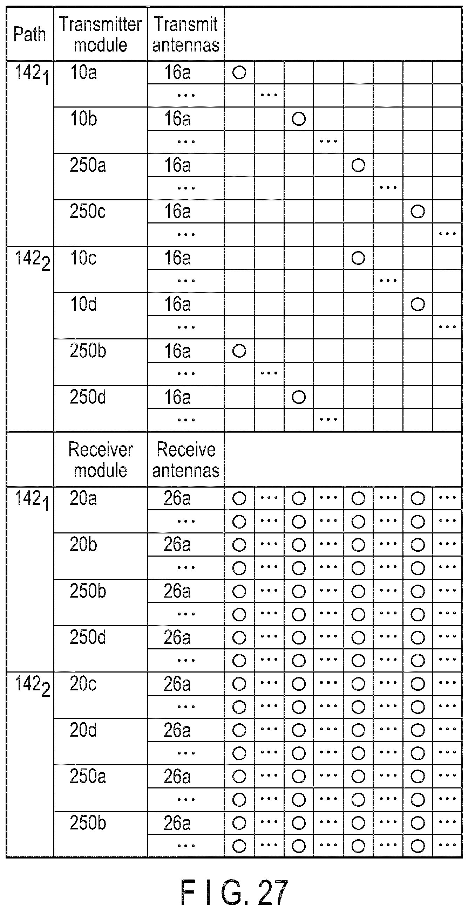

FIG. 27 is shows another example of the transmission/reception sequence of the inspection device 230 according to the second arrangement. The processor 90 simultaneously drives the antenna module 262 arranged in the first left enclosure $144_1$ and the antenna module 266 arranged in the enclosure 240, and then simultaneously drives the antenna module 264 arranged in the second right enclosure $146_2$ and the antenna module 266 arranged in the enclosure 240.

More specifically, the processor 90 causes the transmit antennas 16a, ... of the transmitter module 10a in the antenna module 262 arranged in the first left enclosure $144_1$ and the transmit antennas 16a, ... of the transmitter module 10b in the antenna module 262 to sequentially transmit the radar signals toward the first path $142_1$, and simultaneously causes the transmit antennas 16a, ... of the transmitter module 250b in the antenna module 266 arranged in the enclosure 240 and the transmit antennas 16a, ... of the transmitter/receiver module 250d in the antenna module 266 to sequentially transmit the radar signals toward the second path $142_2$.

Next, the processor 90 causes the transmit antennas 16a, ... of the transmitter/receiver module 250a in the antenna module 266 arranged in the enclosure 240 and the transmit antennas 16a, ... of the transmitter/receiver module 250c in the antenna module 266 to sequentially transmit the radar signals toward the first path $142_1$, and simultaneously causes the transmit antennas 16a, ... of the transmitter module 10c in the antenna module 264 arranged in the second right enclosure $146_2$ and the transmit antennas 16a, ... of the transmitter module 10d in the antenna module 264 to sequentially transmit the radar signals toward the second path $142_2$.

When the transmitter modules 10a to 10d and the transmitter/receiver modules 250a to 250d transmit the radar signals, the processor 90 causes all of the receive antennas 26a to 26p of all of the receiver modules 20a to 20d and all the receive antennas 26a to 26p of all of the transmitter/receiver modules 250a to 250d to receive the reflected signals from the first path $142_1$ and the second path $142_2$. Thus, the inspection of the first path $142_1$ and the second path $142_2$ finishes.

The processor 90 inspects the first path $142_1$ and the second path $142_2$ based on the transmitted signals (chirp signals) used for the transmission of the electromagnetic waves to the first path $142_1$ and the second path $142_2$ by the transmit antennas 16 of the transmit/receive modules 250a and 250c and the received signals obtained by the received electromagnetic waves from the first path $142_1$ and the second path $142_2$ by the receive antennas 26 of the transmit/receive modules 250b and 250d. More specifically, the processor 90 can obtain information such as a distance to a predetermined item, a direction, a position, a shape, a type, and the like by comparing the transmitted signal and the received signal. The radar device can perform the inspection by comparing the transmitted signal of the transmit antenna and the received signal of the receive antenna by using the transmit antenna and the receive antenna opposed to each other. According to the present arrangement, since the chirp signal from the signal generator module 30 is sequentially transmitted from all of the receive antennas 16, the inspection can be performed by comparing the transmitted signals of the transmit antennas of the transmitter/receiver modules 250 and the received signals of the receive antennas of the transmitter/receiver modules 250.

In the transmission/reception sequence in FIG. 27 as well, even when the signal generator module 30 is used in common for the inspection of a plurality of lanes, the reduction in the inspection efficiency can be avoided by simultaneously transmitting the radar signals for a plurality of lanes. As described above, simultaneous includes the case where the timing points of the start of the transmission for two adjacent lanes are shifted by a few seconds.

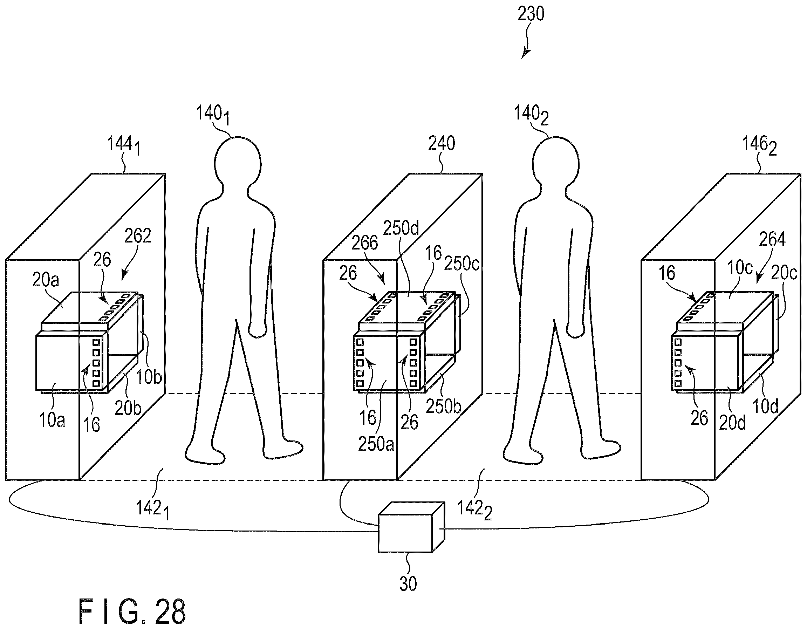

FIG. 28 illustrates a modified example of the inspection device 230 (FIG. 19) according to the second arrangement. In FIG. 19, the antenna modules of the first left enclosure $144_1$ and the antenna module of the second right enclosure $146_2$ have the same configurations. In the first left enclosure $144_1$ and the second right enclosure $146_2$ in FIG. 19, the transmitter module 10 is arranged horizontally and the receiver module 20 is arranged vertically. In the enclosure 240, the transmitter/receiver modules 250b and 250d are arranged such that the receive antennas 26 are arranged to be opposed to the transmit antennas 16 of the transmitter modules 10a and 10b of the first left enclosure $144_1$.

The configurations of the enclosure 240 and the second right enclosure $146_2$ in the modified example in FIG. 28 are the same as those in FIG. 19. In the first left enclosure $144_1$, the transmitter modules 10a and 10b are arranged vertically and the receiver modules 20a and 20b are arranged horizontally. Therefore, in the enclosure 240, the transmitter/receiver modules 250a and 250c are arranged such that the transmit antennas 16 are arranged to be opposed to the transmit antennas 16 of the transmitter modules 10a and 10b of the first left enclosure $144_1$. The transmitter/receiver modules 250d and 250b are arranged such that the receive antennas 26 are arranged to be opposed to the receive antennas 26 of the receiver modules 20a and 20b of the first left enclosure $144_1$. In this modified example as well, the performance same as that according to the second arrangement can be obtained.

In the enclosure 240 of the modified example in FIG. 28, the transmitter/receiver modules 250b and 250d may be arranged such that the receive antennas 26 are arranged to be opposed to the transmit antennas 16 of the transmitter modules 10a and 10b of the first left enclosure $144_1$.

In the second right enclosure $146_2$ in the modified example in FIG. 28, the transmitter modules 10c and 10d may be arranged vertically and the receiver modules 20c and 20d may be arranged horizontally.

The arrangements of the transmitter module 10 and the receiver module 20 in each of the enclosures $144_1$ and $146_2$ described above are not limited to cuboid arrangements but are arbitrary. For example, these modules may be arranged linearly in one or two lines, or be arranged simply in four lines. The number of the modules is not limited to four, but may be arbitrary plural number. The arrangement of the transmitter modules 250 in the enclosure 240 is not limited to the cuboid arrangement but is arbitrary. For example, these modules may be arranged linearly in one or two lines, or be arranged simply in four lines. The number of the modules is not limited to four, but may be arbitrary plural number.

The radar device according to the second arrangement has a module configuration including the IC 38 having the radar function. A module includes the module 10 having the transmission function, the module 20 having the reception function, the module 30 having the signal generation function of the chirp signal and the clock signal, and the module 250 having the transmission/reception function. The signal generator module 30 is used in common for a plurality of inspection lanes, for example, for the first path $142_1$ and the second path $142_2$. The module 10 having the transmission function is arranged in each of the first path $142_1$ and the second path $142_2$. The module 20 having the reception function is arranged in each of the first path $142_1$ and the second path $142_2$. The module 250 having the transmission/reception function is arranged in common for the first path $142_1$ and the second path $142_2$. When the module 250 transmits the radar signal for the first path $142_1$, the module 250 receives the radar signal for the second path $142_2$ but does not receive the radar signal for the first path $142_1$. When the module 250 transmits the radar signal for the second path $142_2$, the module 250 receives the radar signal for the first path $142_1$ but does not receive the radar signal for the second path $142_2$. In the second arrangement, by providing the module 30 instead of separately providing the module 10 having the transmission function and the module 20 having the reception function in the first path $142_1$ and the second path $142_2$, the number of the modules can be reduced and thus a low-cost and space-saving inspection device that can inspect plurality of lanes can be provided.

One application example of the inspection device is a security system. The security system is arranged in facilities where an indefinite number of people gather, such as airports, train stations, shopping malls, concert halls, exhibition halls, and the like. The security system detects whether or not the object (person or the like) is in possession of a predetermined item such as a dangerous material that is not authorized to be possessed and the like. Since the object may move and may not stay in the inspection area for a long period of time, it is desirable to accurately detect the belongings of the predetermined item in a short period of time.

The inspection device of the present arrangement can inspect the object arranged in or passing through the first area and the second area in short period of time.

While certain arrangements have been described, these arrangements have been presented by way of example only, and are not intended to limit the scope of the claims. Indeed, the novel arrangements described herein may be embodied in a variety of other forms; furthermore, various omissions, substitutions, and changes in the form of the arrangements described herein may be made.

The arrangements as described above include clauses below.

Clause 1

A transmit/receive antenna module, comprising:

a radar circuit arranged at a substrate;
a transmit antenna connected to the radar circuit;
a receive antenna connected to the radar circuit, characterized in that
the transmit antenna is arranged at a first end portion of the substrate;
a receive antenna is arranged at a second end portion of the substrate;
the transmit antenna is capable of transmitting an electromagnetic wave parallel to the substrate; and
the receive antenna is capable of receiving an electromagnetic wave parallel to the substrate.

Clause 2

The transmit/receive antenna module of Clause 1, characterized in that
the radar circuit is arranged between the first end portion and the second end portion.

Clause 3

The transmit/receive antenna module of Clause 1, characterized in that
an angle formed by a direction of a main lobe of the transmit antenna and a direction of a main lobe of the receive antenna is 90 degrees or more.

Clause 4

The transmit/receive antenna module of Clause 3, characterized in that
the angle is 170 degrees or more and 180 degrees or less

Clause 5

The transmit/receive antenna module of Clause 1, characterized in that

the transmit antenna comprises a transmit antenna array including antennas, and
the receive antenna comprises a receive antenna array including antennas.

Clause 6

The transmit/receive antenna module of Clause 5, characterized in that

the radar circuit comprises transmitter circuits, receiver circuits, and a clock generation circuit;
at least a part of the antennas of the transmit antenna array is connected to each of the transmitter circuits;
at least a part of the antennas of the receive antenna array is connected to each of the receiver circuits; and
the transmitter circuits and the receiver circuits are connected to the clock generation circuit.

Clause 7

A system inspecting a first object in a first area and a second object in a second area, characterized by comprising:

the transmit/receive antenna module of one of Clauses 1 to 5;
a first antenna module comprising at least a transmit antenna;
a second antenna module comprising at least a receive antenna; and
a signal generator module connected to the transmit/receive antenna module, the first antenna module, and the second antenna module, characterized in that
the transmit antenna of the first antenna module is capable of transmitting an electromagnetic wave to the first area between the transmit/receive antenna module and the first antenna module;
the receive antenna of the transmit/receive antenna module is capable of receiving an electromagnetic wave from the first area;
the transmit antenna of the transmit/receive antenna module is capable of transmitting an electromagnetic wave to the second area between the transmit/receive antenna module and the second antenna module; and
the receive antenna of the second antenna module is capable of receiving an electromagnetic wave from the second area.

Clause 8

The system of Clause 7, characterized in that

the transmit/receive antenna module is configured to transmit the electromagnetic wave to the first area in a first time period;
the transmit/receive antenna module is configured to receive the electromagnetic wave from the second area in a second time period; and
the second time period overlaps with at least a part of the first time period.

Clause 9

The system of Clause 7, characterized by further comprising:

a processor unit connected to the radar circuit, characterized in that
the processor unit is configured to perform an inspection of the first area based on a transmitted signal used for transmitting the electromagnetic wave by the transmit antenna of the transmit/receive antenna module and a received signal obtained by the receive antenna of the transmit/receive antenna module.

Clause 10

The system of Clause 9, characterized in that
the inspection includes obtaining information regarding on presence or absence of the object and presence or absence of a predetermined item in the first area.

Clause 11

A method for a transmit/receive antenna module comprising a radar circuit arranged at a substrate, a transmit antenna arranged at a first end portion of the substrate and connected to the radar circuit, a receive antenna arranged at a second end portion of the substrate and connected to the radar circuit, the method characterized by comprising:

transmitting an electromagnetic wave parallel to the substrate from the transmit antenna; and
receiving an electromagnetic wave parallel to the substrate by the receive antenna.

Clause 12

A non-transitory computer-readable storage medium storing a computer program which is executable by a computer for controlling a transmit/receive antenna module comprising a radar circuit arranged at a substrate, a transmit antenna arranged at a first end portion of the substrate and connected to the radar circuit, a receive antenna arranged at a second end portion of the substrate and connected to the radar circuit, characterized in that the program causes the computer to execute functions of:

transmitting an electromagnetic wave parallel to the substrate from the transmit antenna; and
receiving an electromagnetic wave parallel to the substrate by the receive antenna.

**Claims**

1.  A transmit/receive antenna module, comprising:

    a radar circuit (30, 90) arranged at a substrate;
    a transmit antenna (16) connected to the radar circuit;
    a receive antenna (26) connected to the radar circuit, **characterized in that**
    the transmit antenna (16) is arranged at a first end portion of the substrate,
    a receive antenna (26) is arranged at a second end portion of the substrate,
    the transmit antenna (16) is capable of transmitting an electromagnetic wave parallel to the substrate, and
    the receive antenna (26) is capable of receiving an electromagnetic wave parallel to the substrate.

2.  The transmit/receive antenna module of claim 1, **characterized in that**
    the radar circuit (30, 90) is arranged between the first end portion and the second end portion.

3.  The transmit/receive antenna module of claim 1, **characterized in that**
    an angle formed by a direction of a main lobe of the transmit antenna (16) and a direction of a main lobe of the receive antenna (26) is 90 degrees or more.

4.  The transmit/receive antenna module of claim 3, **characterized in that**
    the angle is 170 degrees or more and 180 degrees or less

5.  The transmit/receive antenna module of claim 1, **characterized in that**

    the transmit antenna (16) comprises a transmit antenna array including antennas, and
    the receive antenna (26) comprises a receive antenna array including antennas.

6.  The transmit/receive antenna module of claim 5, **characterized in that**

    the radar circuit (30, 90) comprises transmitter circuits (42), receiver circuits (52), and a clock generation circuit (60),
    at least a part of the antennas of the transmit antenna array (16) is connected to each of the transmitter circuits (42),
    at least a part of the antennas of the receive antenna array (26) is connected to each of the receiver circuits (52), and
    the transmitter circuits (42) and the receiver circuits (52) are connected to the clock generation circuit (60).

7.  A system inspecting a first object in a first area and a second object in a second area, **characterized by** comprising:

    the transmit/receive antenna module (250) of one of claims 1 to 5;
    a first antenna module (10) comprising at least a transmit antenna (16);
    a second antenna module (20) comprising at least a receive antenna (26); and
    a signal generator module (30, 60) connected to the transmit/receive antenna module (250), the first antenna module (10), and the second antenna module (20), **characterized in that**
the transmit antenna (16) of the first antenna module (10) is capable of transmitting an electromagnetic wave to the first area () between the transmit/receive antenna module (250) and the first antenna module,
the receive antenna (26) of the transmit/receive antenna module is capable of receiving an electromagnetic wave from the first area,
the transmit antenna (16) of the transmit/receive antenna module is capable of transmitting an electromagnetic wave to the second area between the transmit/receive antenna module and the second antenna module, and
the receive antenna (26) of the second antenna module is capable of receiving an electromagnetic wave from the second area.

8. The system of claim 7, **characterized in that**

the transmit/receive antenna module is configured to transmit the electromagnetic wave to the first area in a first time period,
the transmit/receive antenna module is configured to receive the electromagnetic wave from the second area in a second time period, and
the second time period overlaps with at least a part of the first time period.

9. The system of claim 7, **characterized by** further comprising:

a processor unit connected to the radar circuit (30, 90), **characterized in that**
the processor unit is configured to perform an inspection of the first area based on a transmitted signal used for transmitting the electromagnetic wave by the transmit antenna (16) of the transmit/receive antenna module and a received signal obtained by the receive antenna (26) of the transmit/receive antenna module.

10. The system of claim 9, **characterized in that**
the inspection includes obtaining information regarding on presence or absence of the object and presence or absence of a predetermined item in the first area.

11. A method for a transmit/receive antenna module comprising a radar circuit (30, 90) arranged at a substrate, a transmit antenna (16) arranged at a first end portion of the substrate and connected to the radar circuit (30, 90), a receive antenna (26) arranged at a second end portion of the substrate and connected to the radar circuit (30, 90), the method **characterized by** comprising:

transmitting an electromagnetic wave parallel to the substrate from the transmit antenna (16); and
receiving an electromagnetic wave parallel to the substrate by the receive antenna (26).

12. A non-transitory computer-readable storage medium storing a computer program which is executable by a computer for controlling a transmit/receive antenna module comprising a radar circuit arranged at a substrate, a transmit antenna arranged at a first end portion of the substrate and connected to the radar circuit, a receive antenna arranged at a second end portion of the substrate and connected to the radar circuit, **characterized in that** the program causes the computer to execute functions of:

transmitting an electromagnetic wave parallel to the substrate from the transmit antenna; and
receiving an electromagnetic wave parallel to the substrate by the receive antenna.

F I G. 1

F I G. 2

F I G. 3

EP 4 528 314 A1

FIG.4

F I G. 5

F I G. 6

F I G. 7

F I G. 8

F I G. 9

F I G. 10

F I G. 11

F I G. 12

F I G. 13

EP 4 528 314 A1

F I G. 14

F I G. 15

| Path | Transmitter module | Transmit antennas | | | | | | | | | | | | | | | |
|---|---|---|---|---|---|---|---|---|---|---|---|---|---|---|---|---|---|
| 142₁ | 10a | 16a | O | | | | | | | | | | | | | | |
| | | 16b | | O | | | | | | | | | | | | | |
| | | ... | | | ... | | | | | | | | | | | | |
| | 10b | 16a | | | | O | | | | | | | | | | | |
| | | ... | | | | | ... | | | | | | | | | | |
| | ... | ... | | | | | | ... | | | | | | | | | |
| | 10d | 16a | | | | | | | O | | | | | | | | |
| | | ... | | | | | | | | ... | | | | | | | |
| 142₂ | 10a | 16a | | | | | | | | | O | | | | | | |
| | | 16b | | | | | | | | | | O | | | | | |
| | | ... | | | | | | | | | | | ... | | | | |
| | 10b | 16a | | | | | | | | | | | | O | | | |
| | | ... | | | | | | | | | | | | | ... | | |
| | ... | ... | | | | | | | | | | | | | | ... | |
| | 10d | 16a | | | | | | | | | | | | | | | O |
| | | ... | | | | | | | | | | | | | | | | ... |

| | Receiver module | Receive antennas | | | | | | | | | | | | | | | |
|---|---|---|---|---|---|---|---|---|---|---|---|---|---|---|---|---|---|
| 142₁ | 20a | 26a | O | O | ... | O | ... | ... | O | ... | | | | | | | |
| | | 26b | O | O | ... | O | ... | ... | O | ... | | | | | | | |
| | | ... | O | O | ... | O | ... | ... | O | ... | | | | | | | |
| | 20b | 26a | O | O | ... | O | ... | ... | O | ... | | | | | | | |
| | | ... | O | O | ... | O | ... | ... | O | ... | | | | | | | |
| | ... | ... | ... | ... | ... | ... | ... | ... | ... | ... | | | | | | | |
| | 20d | 26a | O | O | ... | O | ... | ... | O | ... | | | | | | | |
| | | ... | O | O | ... | O | ... | ... | O | ... | | | | | | | |
| 142₂ | 20a | 26a | | | | | | | | | O | O | ... | O | ... | ... | O | ... |
| | | 26b | | | | | | | | | O | O | ... | O | ... | ... | O | ... |
| | | ... | | | | | | | | | O | O | ... | O | ... | ... | O | ... |
| | 20b | 26a | | | | | | | | | O | O | ... | O | ... | ... | O | ... |
| | | ... | | | | | | | | | O | O | ... | O | ... | ... | O | ... |
| | | ... | | | | | | | | | ... | ... | ... | ... | ... | ... | ... | ... |
| | 20d | 26a | | | | | | | | | O | O | ... | O | ... | ... | O | ... |
| | | ... | | | | | | | | | O | O | ... | O | ... | ... | O | ... |

F I G. 16

| Path | Transmitter module | Transmit antennas | | | | | | | | |
|---|---|---|---|---|---|---|---|---|---|---|
| $142_1$ | 10a | 16a | O | | | | | | | |
| | | 16b | | O | | | | | | |
| | | ... | | | ... | | | | | |
| | 10b | 16a | | | | O | | | | |
| | | ... | | | | | ... | | | |
| | ... | ... | | | | | | ... | | |
| | 10d | 16a | | | | | | | O | |
| | | ... | | | | | | | | ... |
| $142_2$ | 10a | 16a | O | | | | | | | |
| | | 16b | | O | | | | | | |
| | | ... | | | ... | | | | | |
| | 10b | 16a | | | | O | | | | |
| | | ... | | | | | ... | | | |
| | ... | ... | | | | | | ... | | |
| | 10d | 16a | | | | | | | O | |
| | | ... | | | | | | | | ... |
| | **Receiver module** | **Receive antennas** | | | | | | | | |
| $142_1$ | 20a | 26a | O | O | ... | O | ... | ... | O | ... |
| | | 26b | O | O | ... | O | ... | ... | O | ... |
| | | ... | O | O | ... | O | ... | ... | O | ... |
| | 20b | 26a | O | O | ... | O | ... | ... | O | ... |
| | | ... | O | O | ... | O | ... | ... | O | ... |
| | ... | ... | ... | ... | ... | ... | ... | ... | ... | ... |
| | 20d | 26a | O | O | ... | O | ... | ... | O | ... |
| | | ... | O | O | ... | O | ... | ... | O | ... |
| $142_2$ | 20a | 26a | O | O | ... | O | ... | ... | O | ... |
| | | 26b | O | O | ... | O | ... | ... | O | ... |
| | | ... | O | O | ... | O | ... | ... | O | ... |
| | 20b | 26a | O | O | ... | O | ... | ... | O | ... |
| | | ... | O | O | ... | O | ... | ... | O | ... |
| | ... | ... | ... | ... | ... | ... | ... | ... | ... | ... |
| | 20d | 26a | O | O | ... | O | ... | ... | O | ... |
| | | ... | O | O | ... | O | ... | ... | O | ... |

F I G. 17

Margin D

Enclosure width L — Path width W — Enclosure width L — Enclosure width L — Path width W — Enclosure width L

10a

Antenna x2 of transmitter module x1

20a

20b

10b

20c

10c

10d

20d

$144_1$     $142_1$     $146_1$

10a

Antenna y2 of transmitter module y1

20a

R1    R2

20b

10b

140

$144_2$     $142_2$     $146_2$

20c

10c

10d

20d

F I G. 18

F I G. 19

F I G. 20

F I G. 21

Transmitter/receiver modules

250a

EP 4 528 314 A1

40

16

16

16

16

IC

12a~12h

F I G. 22

26

26

26

26

IC

22a~22h

F I G. 23

F I G. 24

EP 4 528 314 A1

F I G. 25

| Path | Transmitter module | Transmit antennas | | | | | | | | |
|---|---|---|---|---|---|---|---|---|---|---|
| $142_1$ | 10a | 16a | O | | | | | | | |
| | | ... | | ... | | | | | | |
| | 10b | 16a | | | O | | | | | |
| | | ... | | | | ... | | | | |
| | 250a | 16a | | | | | O | | | |
| | | ... | | | | | | ... | | |
| | 250c | 16a | | | | | | | O | |
| | | ... | | | | | | | | ... |
| $142_2$ | 10c | 16a | O | | | | | | | |
| | | ... | | ... | | | | | | |
| | 10d | 16a | | | O | | | | | |
| | | ... | | | | ... | | | | |
| | 250b | 16a | | | | | O | | | |
| | | ... | | | | | | ... | | |
| | 250d | 16a | | | | | | | O | |
| | | ... | | | | | | | | ... |

| Path | Receiver module | Receive antennas | | | | | | | | |
|---|---|---|---|---|---|---|---|---|---|---|
| $142_1$ | 20a | 26a | O | ... | O | ... | O | ... | O | ... |
| | | ... | O | ... | O | ... | O | ... | O | ... |
| | 20b | 26a | O | ... | O | ... | O | ... | O | ... |
| | | ... | O | ... | O | ... | O | ... | O | ... |
| | 250b | 26a | O | ... | O | ... | O | ... | O | ... |
| | | ... | O | ... | O | ... | O | ... | O | ... |
| | 250d | 26a | O | ... | O | ... | O | ... | O | ... |
| | | ... | O | ... | O | ... | O | ... | O | ... |
| $142_2$ | 20c | 26a | O | ... | O | ... | O | ... | O | ... |
| | | ... | O | ... | O | ... | O | ... | O | ... |
| | 20d | 26a | O | ... | O | ... | O | ... | O | ... |
| | | ... | O | ... | O | ... | O | ... | O | ... |
| | 250a | 26a | O | ... | O | ... | O | ... | O | ... |
| | | ... | O | ... | O | ... | O | ... | O | ... |
| | 250b | 26a | O | ... | O | ... | O | ... | O | ... |
| | | ... | O | ... | O | ... | O | ... | O | ... |

F I G. 26

| Path | Transmitter module | Transmit antennas | | | | | | | | |
|---|---|---|---|---|---|---|---|---|---|---|
| 142₁ | 10a | 16a | ○ | | | | | | | |
| | | ... | | ... | | | | | | |
| | 10b | 16a | | | ○ | | | | | |
| | | ... | | | | ... | | | | |
| | 250a | 16a | | | | | ○ | | | |
| | | ... | | | | | | ... | | |
| | 250c | 16a | | | | | | | ○ | |
| | | ... | | | | | | | | ... |
| 142₂ | 10c | 16a | | | | | ○ | | | |
| | | ... | | | | | | ... | | |
| | 10d | 16a | | | | | | | ○ | |
| | | ... | | | | | | | | ... |
| | 250b | 16a | ○ | | | | | | | |
| | | ... | | ... | | | | | | |
| | 250d | 16a | | | ○ | | | | | |
| | | ... | | | | ... | | | | |

| Path | Receiver module | Receive antennas | | | | | | | | |
|---|---|---|---|---|---|---|---|---|---|---|
| 142₁ | 20a | 26a | ○ | ... | ○ | ... | ○ | ... | ○ | ... |
| | | ... | ○ | ... | ○ | ... | ○ | ... | ○ | ... |
| | 20b | 26a | ○ | ... | ○ | ... | ○ | ... | ○ | ... |
| | | ... | ○ | ... | ○ | ... | ○ | ... | ○ | ... |
| | 250b | 26a | ○ | ... | ○ | ... | ○ | ... | ○ | ... |
| | | ... | ○ | ... | ○ | ... | ○ | ... | ○ | ... |
| | 250d | 26a | ○ | ... | ○ | ... | ○ | ... | ○ | ... |
| | | ... | ○ | ... | ○ | ... | ○ | ... | ○ | ... |
| 142₂ | 20c | 26a | ○ | ... | ○ | ... | ○ | ... | ○ | ... |
| | | ... | ○ | ... | ○ | ... | ○ | ... | ○ | ... |
| | 20d | 26a | ○ | ... | ○ | ... | ○ | ... | ○ | ... |
| | | ... | ○ | ... | ○ | ... | ○ | ... | ○ | ... |
| | 250a | 26a | ○ | ... | ○ | ... | ○ | ... | ○ | ... |
| | | ... | ○ | ... | ○ | ... | ○ | ... | ○ | ... |
| | 250b | 26a | ○ | ... | ○ | ... | ○ | ... | ○ | ... |
| | | ... | ○ | ... | ○ | ... | ○ | ... | ○ | ... |

# F I G. 27

F I G. 28

EP 4 528 314 A1

Europäisches
Patentamt

European
Patent Office

Office européen
des brevets

# EUROPEAN SEARCH REPORT

**Application Number**

EP 24 17 7339

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/306034 A1 (TROTTA SAVERIO [DE] ET AL) 20 October 2016 (2016-10-20) | 1-6,11, 12 | INV. G01S7/03 |
| A | * paragraph [0036]; figure 2c * | 7-10 | G01S13/88 H01Q1/38 |
| X | US 2019/302227 A1 (SHIOZAKI RYOSUKE [JP] ET AL) 3 October 2019 (2019-10-03) * paragraphs [0045] - [0051]; figure 5 * | 1,2,11, 12 | H01Q21/08 H01Q25/00 G01S13/02 |
| Y | US 2022/404457 A1 (MORI HIROKI [JP] ET AL) 22 December 2022 (2022-12-22) * paragraphs [0041], [0051] - [0054]; figures 2,4 * | 1-6,11, 12 | |
| Y | US 2018/372844 A1 (JUNGMAIER REINHARD-WOLFGANG [DE] ET AL) 27 December 2018 (2018-12-27) * paragraphs [0061], [0062] * | 1-6,11, 12 | |

**TECHNICAL FIELDS SEARCHED (IPC)**

G01S
H01Q

The present search report has been drawn up for all claims

| Place of search | Date of completion of the search | Examiner |
|---|---|---|
| Munich | 30 October 2024 | Unterberger, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 7339

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | Publication date |
|---|---|---|---|
| US 2016306034 A1 | 20-10-2016 | CN 105720383 A | 29-06-2016 |
| | | DE 102015122722 A1 | 23-06-2016 |
| | | JP 6336430 B2 | 06-06-2018 |
| | | JP 6695380 B2 | 20-05-2020 |
| | | JP 2016166859 A | 15-09-2016 |
| | | JP 2018194547 A | 06-12-2018 |
| | | KR 20160077004 A | 01-07-2016 |
| | | US 2016306034 A1 | 20-10-2016 |
| US 2019302227 A1 | 03-10-2019 | CN 110320516 A | 11-10-2019 |
| | | EP 3547452 A1 | 02-10-2019 |
| | | JP 7008216 B2 | 25-01-2022 |
| | | JP 2019174246 A | 10-10-2019 |
| | | US 2019302227 A1 | 03-10-2019 |
| US 2022404457 A1 | 22-12-2022 | JP 7434213 B2 | 20-02-2024 |
| | | JP 2023000084 A | 04-01-2023 |
| | | US 2022404457 A1 | 22-12-2022 |
| US 2018372844 A1 | 27-12-2018 | CN 109119750 A | 01-01-2019 |
| | | KR 20190000315 A | 02-01-2019 |
| | | US 2018372844 A1 | 27-12-2018 |

EPO FORM P0459

For more details about this annex : see Official Journal of the European Patent Office, No. 12/82